# FASCICULE DE BREVET EUROPEEN

(11) **EP 2 819 352 B1**
(45) Date de publication et mention de la délivrance du brevet: **31.07.2019**
(21) Numéro de dépôt: 14174856.6
(22) Date de dépôt: 27.06.2014
(51) Int. Cl.: H04L 12/58

(54) **Dépôt et consultation de messages par des utilisateurs de réseaux sociaux**
Hinterlassen und Konsultieren von Botschaften durch Nutzer sozialer Netzwerke
Posting and consultation of messages by users of social networks

(30) Priorité: 28.06.2013 FR 1356295; 28.06.2013 FR 1356286
(43) Date de publication de la demande: 31.12.2014
(73) Titulaire: Orange, 75015 Paris (FR)
(72) Inventeur: Couchon, David, 75015 PARIS (FR); Godiniaux, Olivier, 75015 Paris (FR); Benrikhi, Anne, 92140 CLAMART (FR); Gourdin, Jonathan, 35135 CHANTEPIE (FR)

(56) Documents cités:
- WO-A1-2011/051156
- WO-A2-2009/050739
- US-A1- 2011 173 268

## Description

### Domaine technique

La présente invention est relative à la fois au domaine des réseaux sociaux, accessibles par exemple via le réseau informatique de type Internet et aux services de messagerie multimédia.

### Etat de la technique

Les réseaux sociaux sur le réseau Internet permettent à ses utilisateurs de constituer des groupes de contacts, constitués par exemple par des amis, des membres de la famille, des personnes partageant les mêmes intérêts ou de connaissances professionnelles, etc. A cet effet, ils fournissent à leurs utilisateurs des services et outils d'échanges de contenus et informations, tels que par exemple des photos, des états de présence, des informations d'actualité, etc ... Ces services d'échanges sont accessibles via des interfaces utilisateur adaptées.

Parmi ces services d'échanges, le document US20110173268 propose une page de consultation de sa messagerie vocale à partir de sa page de réseau social, mais ce service ne permet pas de déposer à partir du réseau social un message vocal sur cette messagerie vocale. Parmi ces services d'échange, il existe aussi différents services dédiés à la transmission d'un ou plusieurs messages à destination d'un ou de plusieurs utilisateurs du réseau social. Ces messages sont accessibles et consultables via une page Web du réseau social. Dans le cas d'un message « public », le message est consultable par des utilisateurs autres que l'utilisateur destinataire du message, via une page associée à l'utilisateur destinataire du message, appelée parfois le « mur » de cet utilisateur. Dans le cas d'un message « privé », le message ne sera consultable que par l'utilisateur destinataire du message, dans une page Web affichant ses messages privés.

La demande internationale WO2009050739 propose un système facilitant les échanges entre les utilisateurs d'un réseau social permettant d'utiliser un canal de communication plutôt qu'un autre en fonction des préférences de communication de la source et des destinataires dans un contexte donné. Les canaux de communication parmi lesquels les utilisateurs peuvent choisir pour le dépôt de message à destination de l'utilisateur (adresse IP) incluent: email, IM, message vocal (VoIP).

La demande internationale WO2011051156 propose aussi de tel service de messagerie non seulement entre des utilisateurs d'un même réseau social mais aussi des utilisateurs de réseaux sociaux distincts.

Dans les deux premiers cas, il est nécessaire de disposer d'un accès au réseau informatique sous-jacent à ce réseau social (le réseau Internet, en général) pour déposer et/ou consulter de tels messages, voire de créer préalablement un compte utilisateur auprès du réseau social pour le dépôt et/ou consultation des messages « privés ». Ce qui représente une contrainte pour les utilisateurs et restreint l'accès au service de dépôt et/ou de consultation de messages aux seuls utilisateurs dûment équipés et/ou aux seuls moments où ces utilisateurs disposent des équipements adaptés.

La demande internationale WO2009050739 propose, parmi les canaux de communication, le choix du dépôt de message à destination d'une ligne téléphonique : SMS. Dans ce cas, un service destinataire. L'utilisation du service intermédiaire induit un retard dans la délivrance du message. En outre, le message étant déposé directement sur le terminal, cela peut poser des problèmes de surcharge de la mémoire du terminal.

La demande internationale WO2011051156 propose aux utilisateurs du réseau social de déposer un message à destination d'interlocuteur qui ne dispose pas d'accès au réseau informatique mais d'un réseau de téléphonie en leur permettant de déposer un message sur une boite vocale en identifiant le destinataire par un numéro de téléphone. Néanmoins, l'utilisateur du réseau social ne peut pas bénéficier de ce service pour ces amis dans le réseau social puisqu'il ne connaît généralement pas leur numéro de téléphone.

L'invention offre une solution qui remédie à tout ou partie des inconvénients de l'état de la technique.

Selon un premier aspect, l'invention concerne un procédé de demande de dépôt de message et corrélativement, un procédé de traitement d'une demande de dépôt de message, une entité réseau mettant en oeuvre le procédé de traitement d'une demande de dépôt de message et un terminal mettant en oeuvre le procédé de demande de dépôt de message.

Le procédé de traitement d'une demande de dépôt de message provenant d'un utilisateur d'un réseau social, *dit utilisateur déposant,* comprend les étapes suivantes effectuées par au moins une entité réseau :
- une étape de réception, par au moins une entité réseau, d'une demande de dépôt d'un message destiné à au moins un utilisateur du réseau social, dit utilisateur destinataire, et d'informations associées à ladite demande de dépôt de message comprenant le message et un identifiant d'utilisateur du réseau social pour chaque utilisateur destinataire,
- une étape d'identification, dans ladite au moins une entité réseau, d'au moins une ligne téléphonique d'un réseau téléphonique associée, dans le réseau social, à l'identifiant d'utilisateur du réseau social d'un utilisateur destinataire, en réponse à la réception de la demande de dépôt du message,

- une étape de dépôt, à partir de ladite au moins une entité réseau, dudit message dans une boîte de messagerie du réseau téléphonique associée à la ligne téléphonique identifiée, la boîte de messagerie du réseau téléphonique étant gérée par un serveur de messagerie du réseau téléphonique dans lequel au moins un terminal associé avec la ligne téléphonique identifiée établit des communications téléphonique en utilisant la ligne téléphonique identifiée et
- une étape d'envoi, à partir de ladite au moins une entité réseau, dans le réseau téléphonique, d'une notification à destination du au moins un terminal associé à la ligne téléphonique identifiée, la notification indiquant que le message est disponible dans la boite de messagerie du réseau téléphonique associée avec la ligne téléphonique identifiée et comprenant un identifiant d'utilisateur du réseau social affecté à l'utilisateur déposant.

Corrélativement, le procédé de demande de dépôt de message, provenant d'un utilisateur de réseau social, *dit utilisateur déposant,* comprend une étape d'envoi d'une demande de dépôt d'un message, destiné à au moins un utilisateur du réseau social, *dit utilisateur destinataire* et d'un identifiant d'utilisateur du réseau social pour chaque utilisateur destinataire,
l'envoi de ladite demande déclenchant un dépôt dudit message dans une boîte de messagerie associée à une ligne téléphonique, dont un identification est mémorisée en association avec un dit identifiant d'utilisateur du réseau social d'un utilisateur destinataire, et un envoi d'une notification de dépôt dudit message à destination d'au moins un terminal associé à la ligne téléphonique,
la notification comprenant un identifiant d'utilisateur du réseau social affecté à l'utilisateur déposant.

Une entité réseau met en oeuvre le procédé de traitement de la demande de dépôt de message. Cette entité réseau comprend :
- un module de réception d'une demande de dépôt d'un premier message, provenant d'un utilisateur d'un réseau social, *dit utilisateur déposant,* destiné à au moins un utilisateur du réseau social, *dit utilisateur destinataire,* et d'informations associées à ladite demande de dépôt de message comprenant le message et d'un identifiant d'utilisateur du réseau social pour chaque utilisateur destinataire,
- un module d'identification d'au moins une ligne téléphonique d'un réseau téléphonique associée, dans le réseau social, à un dit identifiant d'utilisateur du réseau social d'un utilisateur destinataire, en réponse à la réception de la demande de dépôt du message,
- un module de dépôt, dudit premier message dans une boîte de messagerie du réseau téléphonique associée à la ligne téléphonique identifiée, la boîte de messagerie du réseau téléphonique étant gérée par un serveur de messagerie du réseau téléphonique dans lequel au moins un terminal associé avec la ligne téléphonique identifiée établit des communications téléphonique en utilisant la ligne téléphonique identifiée et
- un module d'envoi, dans le réseau téléphonique, d'une notification à destination du au moins un terminal associé à la ligne téléphonique identifiée, la notification indiquant que le premier message est disponible dans la boite de messagerie du réseau téléphonique associée avec la ligne téléphonique identifiée et comprenant un identifiant d'utilisateur du réseau social affecté à l'utilisateur déposant.

Un terminal communique avec cette entité réseau pour envoyer la demande de dépôt de message. Ce terminal comprend un module d'envoi, à au moins une entité réseau, d'une demande de dépôt d'un message, provenant d'un utilisateur d'un réseau social, *dit utilisateur déposant,* destiné à au moins un utilisateur du réseau social, *dit utilisateur destinataire,* et d'informations associées à ladite demande de dépôt de message comprenant le message et un identifiant d'utilisateur du réseau social pour chaque utilisateur destinataire,
ledit envoi déclenchant un dépôt, à partir de ladite au moins une entité réseau, dudit message dans une boîte de messagerie d'un réseau téléphonique associée à une ligne téléphonique du réseau téléphonique identifiée en réponse à l'envoi de la demande de dépôt du message, l'identifiant de la ligne téléphonique étant mémorisé, dans le réseau social, en association avec l'identifiant d'utilisateur du réseau social d'un utilisateur destinataire, la boîte de messagerie du réseau téléphonique étant gérée par un serveur de messagerie du réseau téléphonique dans lequel au moins un terminal associé avec la ligne téléphonique identifiée établit des communications téléphonique en utilisant la ligne téléphonique identifiée et un envoi, à partir de ladite au moins une entité réseau, dans le réseau téléphonique, d'une notification à destination du au moins un terminal associé à la ligne téléphonique,
la notification indiquant que le message est disponible dans la boite de messagerie du réseau téléphonique associée avec la ligne téléphonique identifiée et comprenant un identifiant d'utilisateur du réseau social affecté à l'utilisateur déposant.

L'invention permet un dépôt de message entre utilisateurs de réseaux sociaux en passant par une boîte de messagerie d'une ligne téléphonique, et cela sans que les utilisateurs aient besoin au préalable de partager leurs identifications de lignes téléphoniques. Seuls les identifiants du réseau social des différents utilisateurs sont requis pour effectuer ce dépôt de message.

En effet, c'est l'identifiant du réseau social de l'utilisateur destinataire qui est utilisé pour rechercher une identification de ligne téléphonique. De même, lors de la notification du dépôt de message, c'est l'identifiant d'utilisateur du réseau social de l'utilisateur déposant qui est utilisé, et non nécessairement l'identification de sa ligne téléphonique, comme c'est le cas habituellement pour les dépôts de message dans les boîtes de messagerie de ligne téléphonique.

L'utilisateur destinataire du message n'a donc plus besoin de se connecter au réseau social pour pouvoir recevoir des messages des utilisateurs avec lequel il est en relation dans le réseau social. Il peut consulter ces messages directement dans sa boîte de messagerie, et ce tout en bénéficiant d'une logique d'identification d'utilisateur qui est celle du réseau social. Ainsi il cumule les possibilités qui lui sont apportées par le réseau social en matières de mise en relation avec d'autres utilisateurs et celles d'un système de messagerie, tel que proposé par les opérateurs de lignes téléphoniques, en matière de facilité d'accès et de consultation.

Concernant la relation existant dans le réseau social entre l'utilisateur déposant et le ou les utilisateurs destinataires, différents modes de réalisation sont possibles.

Dans un mode de réalisation du procédé de traitement ou de demande de dépôt, l'identifiant d'utilisateur du réseau social de l'utilisateur déposant est un identifiant sous lequel l'utilisateur déposant est connu de l'utilisateur destinataire dans le réseau social et/ou l'identifiant d'utilisateur du réseau social de l'utilisateur destinataire est un identifiant sous lequel l'utilisateur destinataire est connu de l'utilisateur déposant dans le réseau social.

Dans un mode de réalisation du procédé de traitement ou de demande de dépôt, l'identifiant d'utilisateur du réseau social de l'utilisateur déposant est un identifiant, par exemple un pseudonyme, ne divulguant pas l'identité réelle de l'utilisateur déposant et/ou l'identifiant d'utilisateur du réseau social de l'utilisateur destinataire est un identifiant, par exemple un pseudonyme, ne divulguant pas l'identité réelle de l'utilisateur destinataire.

Dans un mode de réalisation du procédé de traitement ou de demande de dépôt, l'identification de la ligne téléphonique est déclarée par l'utilisateur destinataire dans des données de profil d'utilisateur du réseau social de cet utilisateur destinataire qui ne sont pas accessibles à l'utilisateur déposant au travers du réseau social.

Ainsi un dépôt de message entièrement anonymisé peut avoir lieu entre un utilisateur déposant et un ou plusieurs destinataires : l'identité réelle des utilisateurs n'est jamais divulguée, seuls les identifiants d'utilisateurs de réseaux sociaux étant transmis lors du dépôt de message et de sa notification ultérieure.

Concernant la mémorisation du message, différentes données sont susceptibles d'être stockées en association avec le message.

Dans un mode de réalisation, le procédé de traitement comprend une étape de mémorisation, en association avec le message déposé, d'un identifiant d'utilisateur du réseau social de l'utilisateur déposant et du ou des utilisateurs destinataires. Les identifiants d'utilisateur du réseau social mémorisés avec le message permettent d'effectuer une notification du dépôt de message ou une consultation du message

Dans un mode de réalisation, le procédé de traitement comprend une étape de mémorisation, en association avec le message déposé, d'une identification de ligne téléphonique pour l'utilisateur déposant et du ou des utilisateurs destinataires. Ces identifications de lignes téléphoniques servent à déposer un message de réponse en réponse à un message déposé ou à déposer un message de réponse en réponse à un message de réponse.

Concernant la constitution de la demande de dépôt du message, différents modes de réalisation sont possibles.

Dans un mode de réalisation du procédé de traitement, la demande de dépôt de message est réceptionnée par un service de demande de dépôt de message qui est intégré dans un service du réseau social auquel appartiennent l'utilisateur déposant et l'utilisateur destinataire.

Dans un mode de réalisation du procédé de traitement, la demande de dépôt de message est réceptionnée par un service de demande de dépôt de message qui est intégré dans un service de dépôt de message d'un réseau téléphonique.

Dans un mode de réalisation, le procédé de traitement comprend une étape de présentation à l'utilisateur déposant d'une liste d'utilisateurs du réseau social parmi laquelle au moins un utilisateur destinataire est à sélectionner, ladite liste étant constituée à partir d'une liste d'utilisateurs reliés avec l'utilisateur déposant dans un réseau social.

Le service de dépôt de message peut donc être mis à disposition des utilisateurs soit dans le réseau social, soit en tant que service additionnel d'un réseau téléphonique.

Concernant l'identification de la ligne téléphonique, différents modes de réalisation sont possibles.

Dans un mode de réalisation du procédé de traitement, la ligne téléphonique identifiée est une ligne téléphonique d'un dit utilisateur destinataire, dont une identification a été mémorisée en association avec un identifiant d'utilisateur du réseau social affecté à cet utilisateur destinataire. Il suffit ainsi à l'utilisateur du réseau social de déclarer une ligne téléphonique, par exemple dans son profil d'utilisateur du réseau social pour pouvoir bénéficier du service.

Dans un mode de réalisation du procédé de traitement, la ligne téléphonique identifiée est une ligne téléphonique sélectionnée parmi plusieurs lignes téléphoniques d'un *dit utilisateur destinataire* en fonction d'un critère relatif au lien dans le réseau social entre l'utilisateur déposant et l'utilisateur destinataire concerné.

Dans un mode de réalisation du procédé de traitement, la ligne téléphonique identifiée est une ligne téléphonique sélectionnée parmi plusieurs lignes téléphoniques d'un *dit utilisateur destinataire* en fonction d'un critère relatif à l'utilisateur déposant du message et/ou à l'utilisateur destinataire du message.

Il est ainsi possible de privilégier l'utilisation d'une boîte de messagerie plutôt qu'une autre selon le lien existant dans le réseau social.

Selon un deuxième aspect, l'invention concerne un procédé de demande de dépôt de message de réponse et corrélativement, un procédé de traitement d'une demande de dépôt de message de réponse, une entité réseau mettant en oeuvre le procédé de traitement d'une demande de dépôt de message de réponse et un terminal mettant en oeuvre le procédé de demande de dépôt de message de réponse.

Le message de réponse est déposé en réponse à un message antérieur, dit premier message, en provenance d'un utilisateur d'un réseau social, *dit utilisateur déposant,* à destination d'un utilisateur du réseau social, dit utilisateur destinataire, déposé dans une boîte de messagerie d'une ligne téléphonique au moyen d'un procédé, d'une entité réseau et/ou d'un terminal selon le premier aspect de l'invention.

Le procédé de traitement d'une demande de dépôt d'un message de réponse, comprend les étapes suivantes effectuées par au moins une entité réseau :
- une étape de réception, par au moins une entité réseau, d'une demande de dépôt d'un deuxième message, en réponse au premier message, le deuxième message étant destiné à l'utilisateur déposant du premier message, et d'informations associées à ladite demande de dépôt du deuxième message comprenant le deuxième message et un identifiant d'utilisateur du réseau social de l'utilisateur déposant, destinataire du deuxième message,
- une étape d'identification, dans ladite au moins une entité réseau, d'au moins une deuxième ligne téléphonique d'un réseau téléphonique associée, dans le réseau social, à l'identifiant d'utilisateur du réseau social affecté à l'utilisateur déposant du premier message, destinataire du deuxième message, en réponse à la réception de la demande de dépôt du deuxième message,
- une étape pour déclencher, pour au moins une dite deuxième ligne téléphonique identifiée, un dépôt, à partir de ladite au moins une entité réseau, dudit deuxième message dans une boîte de messagerie associée à la deuxième ligne téléphonique identifiée , la boîte de messagerie du réseau téléphonique étant gérée par un serveur de messagerie du réseau téléphonique dans lequel au moins un terminal associé avec la deuxième ligne téléphonique identifiée établit des communications téléphonique en utilisant la deuxième ligne téléphonique identifiée et un envoi, à partir de ladite au moins une entité réseau, dans le réseau téléphonique, d'une notification de dépôt dudit deuxième message à destination du au moins un terminal associé à la deuxième ligne téléphonique identifiée, la notification indiquant que le deuxième message est disponible dans la boite de messagerie du réseau téléphonique associée avec la deuxième ligne téléphonique identifiée et comprenant un identifiant d'utilisateur du réseau social affecté à l'utilisateur ayant demandé le dépôt du deuxième message.

Le procédé de demande de dépôt d'un message de réponse comprend,
- une étape d'envoi, à au moins une entité réseau, d'une demande de dépôt d'un deuxième message, en réponse au premier message, le deuxième message étant destiné à l'utilisateur déposant du premier message, et d'informations associées à ladite demande de dépôt du deuxième message comprenant le deuxième message et un identifiant d'utilisateur du réseau social de l'utilisateur déposant, destinataire du deuxième message,
ladite demande de dépôt déclenchant, pour une deuxième ligne téléphonique associée à l'identifiant d'utilisateur du réseau social affecté à l'utilisateur déposant du premier message, un dépôt, à partir de ladite au moins une entité réseau, du deuxième message dans une boîte de messagerie d'un réseau téléphonique associée à la deuxième ligne téléphonique du réseau téléphonique identifiée en réponse à l'envoi de la demande de dépôt du deuxième message, l'identifiant de la ligne téléphonique étant mémorisé, dans le réseau social, en association avec l'identifiant d'utilisateur du réseau social de l'utilisateur déposant, la boîte de messagerie du réseau téléphonique étant gérée par un serveur de messagerie du réseau téléphonique dans lequel au moins un terminal associé avec la deuxième ligne téléphonique identifiée établit des communications téléphonique en utilisant la deuxième ligne téléphonique identifiée et un envoi, à partir de ladite au moins une entité réseau, dans le réseau téléphonique, d'une notification à destination du au moins un terminal associé à la deuxième ligne téléphonique,
la notification indiquant que le deuxième message est disponible dans la boite de messagerie du réseau téléphonique associée avec la deuxième ligne téléphonique identifiée et comprenant un identifiant d'utilisateur du réseau social affecté à l'utilisateur ayant demandé le dépôt du deuxième message.

Une entité réseau met en oeuvre le procédé de traitement de la demande de dépôt de message de réponse. Cette entité réseau comprend :
- un module de réception d'une demande de dépôt d'un deuxième message, en réponse au premier message, le deuxième message étant destiné à l'utilisateur déposant du premier message, et d'informations associées à ladite demande de dépôt du deuxième message comprenant le deuxième message et un identifiant d'utilisateur du réseau social de l'utilisateur déposant, destinataire du deuxième message,
- un module d'identification d'au moins une deuxième ligne téléphonique d'un réseau téléphonique associée, dans le réseau social, à l'identifiant d'utilisateur du réseau social affecté à l'utilisateur déposant du premier message, destinataire du deuxième message, en réponse à la réception de la demande de dépôt du deuxième message,
- un module pour déclencher, pour au moins une dite deuxième ligne téléphonique identifiée, un dépôt dudit deuxième message dans une boîte de messagerie du réseau téléphonique associée à la deuxième ligne téléphonique identifiée, la boîte de messagerie du réseau téléphonique étant gérée par un serveur de messagerie du réseau téléphonique dans lequel au moins un terminal associé avec la deuxième ligne téléphonique identifiée établit des communications téléphonique en utilisant la deuxième ligne téléphonique identifiée et un envoi, dans le réseau téléphonique, d'une notification à destination du au moins un terminal associé à la deuxième ligne téléphonique identifiée, la notification indiquant que le deuxième message est disponible dans la boite de messagerie du réseau téléphonique associée avec la deuxième ligne téléphonique identifiée et comprenant un identifiant d'utilisateur du réseau social affecté à l'utilisateur ayant demandé le dépôt du deuxième message.

Un terminal communique avec cette entité réseau pour envoyer la demande de dépôt de message de réponse. Ce terminal comprend un module d'envoi, à au moins une entité réseau, d'une demande de dépôt d'un deuxième message, en réponse au premier message, le deuxième message étant destiné à l'utilisateur déposant du premier message, et d'informations associées à ladite demande de dépôt du deuxième message comprenant le deuxième message et un identifiant d'utilisateur du réseau social de l'utilisateur déposant, destinataire du deuxième message,
ladite demande de dépôt déclenchant, pour une deuxième ligne téléphonique associée à l'identifiant d'utilisateur du réseau social affecté à l'utilisateur déposant du premier message, un dépôt, à partir de ladite au moins une entité réseau, du deuxième message dans une boîte de messagerie d'un réseau téléphonique associée à la deuxième ligne téléphonique du réseau téléphonique identifiée en réponse à l'envoi de la demande de dépôt du deuxième message, l'identifiant de la ligne téléphonique étant mémorisé, dans le réseau social, en association avec l'identifiant d'utilisateur du réseau social de l'utilisateur déposant, la boîte de messagerie du réseau téléphonique étant gérée par un serveur de messagerie du réseau téléphonique dans lequel au moins un terminal associé avec la deuxième ligne téléphonique identifiée établit des communications téléphonique en utilisant la deuxième ligne téléphonique identifiée et un envoi, à partir de ladite au moins une entité réseau, dans le réseau téléphonique, d'une notification à destination du au moins un terminal associé à la deuxième ligne téléphonique,
la notification indiquant que le deuxième message est disponible dans la boite de messagerie du réseau téléphonique associée avec la deuxième ligne téléphonique identifiée et comprenant un identifiant d'utilisateur du réseau social affecté à l'utilisateur ayant demandé le dépôt du deuxième message.

L'invention permet ainsi la mise en oeuvre d'un mécanisme de réponse à un message déposé dans une boîte de messagerie d'une ligne téléphonique au moyen d'un procédé, d'une entité réseau et/ou d'un terminal selon un premier aspect de l'invention. Les identifiants d'utilisateurs de réseaux sociaux sont une fois encore utilisé pour procéder cette fois à l'identification de la ligne téléphonique de l'utilisateur destinataire du message de réponse et pour notifier cet utilisateur destinataire, notamment sur l'utilisateur ayant demandé le dépôt du message de réponse.

L'invention permet ainsi un dépôt de message et réponse entre utilisateurs de réseaux sociaux en passant par une boîte de messagerie, et cela sans que les utilisateurs aient besoin au préalable de partager leurs identifications de lignes téléphoniques. Seuls les identifiants du réseau social des différents utilisateurs sont requis pour effectuer ce dépôt de message.

Selon un mode de réalisation, le procédé de traitement d'une demande de dépôt de message de réponse comprend
- une étape de réception d'une demande de dépôt d'un troisième message, en réponse au deuxième message,
- une étape d'identification d'au moins une troisième ligne téléphonique associée à l'identifiant d'utilisateur du réseau social affecté à l'utilisateur déposant du deuxième message,
- une étape pour déclencher, pour au moins une dite troisième ligne téléphonique identifiée, un dépôt dudit troisième message dans une boîte de messagerie associée à la troisième ligne téléphonique identifiée et un envoi d'une notification de dépôt dudit troisième message à destination d'au moins un terminal associé à la troisième ligne téléphonique identifiée, la notification comprenant un identifiant d'utilisateur du réseau social affecté à l'utilisateur ayant demandé le dépôt du troisième message.

Ainsi un message de réponse peut être déposé en réponse à un message de réponse. Et ainsi de suite de manière récursive.

Selon un troisième aspect, l'invention concerne un procédé de demande de consultation de message et corrélativement, un procédé de traitement d'une demande de consultation de message, une entité réseau mettant en oeuvre le procédé de traitement d'une demande de consultation de message et un terminal mettant en oeuvre le procédé de demande de consultation de message.

Le message consulté est un message, déposé sur demande d'un utilisateur de réseau social, *dit utilisateur déposant,* à destination d'un utilisateur de réseau social, dit utilisateur destinataire, dans une boîte de messagerie d'une ligne téléphonique au moyen d'un procédé, d'une entité réseau et/ou d'un terminal selon le premier aspect de l'invention.

Le procédé de traitement d'une demande de consultation de message comprend :
- une étape de réception, en provenance d'un terminal, d'une demande de consultation de message déposé sur demande d'un utilisateur de réseau social, *dit utilisateur déposant,* dans une boîte de messagerie d'une ligne téléphonique au moyen d'un procédé, d'une entité réseau et/ou d'un terminal selon le premier aspect de l'invention,
- pour au moins un premier message déposé dans ladite boîte de messagerie, une étape d'envoi audit terminal d'un identifiant d'utilisateur du réseau social de l'utilisateur déposant du premier message et d'au moins une partie du contenu du premier message, ledit envoi déclenchant une restitution par le terminal dudit identifiant d'utilisateur du réseau social et de la partie du contenu.

Le procédé de demande de consultation comprend:
- une étape d'envoi d'une demande de consultation d'au moins un message déposé sur demande d'un utilisateur de réseau social, *dit utilisateur déposant,* dans une boîte de messagerie d'une ligne téléphonique au moyen d'un procédé, d'une entité réseau et/ou d'un terminal selon le premier aspect de l'invention;
- pour au moins un premier message déposé sur demande d'un utilisateur d'un réseau social, *dit utilisateur déposant,* une étape de réception et de restitution, par le terminal, d'un identifiant d'utilisateur du réseau social affecté à l'utilisateur déposant dans un réseau social et d'au moins une partie du contenu du premier message.

Une entité réseau met en oeuvre le procédé de traitement de la demande de consultation de message de réponse. Cette entité réseau comprend :
- un module de réception, en provenance d'un terminal, d'une demande de consultation de message déposé sur demande d'un utilisateur de réseau social, *dit utilisateur déposant,* dans une boîte de messagerie d'une ligne téléphonique au moyen d'un procédé, d'une entité réseau et/ou d'un terminal selon le premier aspect de l'invention,
- un module d'envoi pour envoyer audit terminal, pour au moins un premier message déposé dans ladite boîte de messagerie, un identifiant d'utilisateur du réseau social de l'utilisateur déposant du premier message et au moins une partie du contenu du premier message, ledit envoi déclenchant une restitution par le terminal dudit identifiant d'utilisateur du réseau social et de la partie du contenu.

Un terminal communique avec cette entité réseau pour envoyer la demande de consultation de message. Ce terminal comprend
- un module d'envoi d'une demande de consultation d'au moins un message déposé sur demande d'un utilisateur de réseau social, *dit utilisateur déposant,* dans une boîte de messagerie d'une ligne téléphonique au moyen d'un procédé, d'une entité réseau et/ou d'un terminal selon le premier aspect de l'invention;
- un module de réception et de restitution d'un identifiant d'utilisateur du réseau social affecté à l'utilisateur déposant dans un réseau social et d'au moins une partie du contenu du premier message.

Selon un mode de réalisation, le procédé de traitement d'une demande de consultation de message comprend une étape d'identification d'au moins un message déposé dans ladite boîte de messagerie par un utilisateur déposant dont un identifiant d'utilisateur du réseau social est fourni par l'utilisateur consultant et une étape pour proposer à l'utilisateur consultant de consulter le ou les messages identifiés.

Selon un mode de réalisation, le procédé de traitement d'une demande de consultation de message comprend une étape d'identification d'au moins un message déposé dans ladite boîte de messagerie à destination d'un utilisateur destinataire dont un identifiant d'utilisateur du réseau social est indiqué par l'utilisateur consultant et une étape consistant à proposer à l'utilisateur consultant de consulter le ou les messages identifiés.

Selon un quatrième aspect, l'invention concerne un procédé de consultation d'un message et corrélativement, un procédé de traitement d'une demande de consultation de message, une entité réseau mettant en oeuvre le procédé de traitement d'une demande de consultation de message et un terminal mettant en oeuvre le procédé de consultation de message. L'utilisateur à l'origine de la demande de consultation de message est un utilisateur de réseau social, appelé ici utilisateur consultant. L'utilisateur ayant demandé le dépôt du message est aussi un utilisateur de réseau social, appelé ici utilisateur déposant.

Le procédé de consultation comprend:
- une étape d'envoi d'une demande de consultation d'au moins un message déposé sur demande d'un utilisateur d'un réseau social, *dit utilisateur déposant,* dans une boîte de messagerie d'une ligne téléphonique dont une identification est mémorisée en association avec un identifiant d'utilisateur du réseau social d'un utilisateur de réseau social, dit utilisateur consultant;
- pour au moins un premier message déposé, une étape de réception et de restitution, par le terminal, d'un identifiant d'utilisateur du réseau social affecté à l'utilisateur déposant dans un réseau social et d'au moins une partie du contenu du premier message.

Le procédé de traitement d'une demande de consultation de message comprend:
- une étape de réception, en provenance d'un terminal, d'une demande de consultation d'au moins un message déposé sur demande d'un utilisateur d'un réseau social, *dit utilisateur déposant,* dans une boîte de messagerie d'une ligne téléphonique dont une identification est mémorisée en association avec un identifiant d'utilisateur du réseau social d'un utilisateur de réseau social, dit utilisateur consultant,
- pour au moins un premier message déposé dans ladite boîte de messagerie, une étape d'envoi audit terminal d'un identifiant d'utilisateur du réseau social de l'utilisateur déposant du premier message et d'au moins une partie du contenu du premier message, ledit envoi déclenchant une restitution par le terminal dudit identifiant d'utilisateur du réseau social et de la partie du contenu.

Une entité réseau met en oeuvre le procédé de traitement de la demande de consultation de message. Cette entité réseau comprend :
- un module de réception, en provenance d'un terminal, d'une demande de consultation d'au moins un message déposé sur demande d'un utilisateur d'un réseau social, *dit utilisateur déposant,* dans une boîte de messagerie d'une ligne téléphonique dont une identification est mémorisée en association avec un identifiant d'utilisateur du réseau social d'un utilisateur de réseau social, dit utilisateur consultant,
- un module d'envoi audit terminal d'un identifiant d'utilisateur du réseau social de l'utilisateur déposant du premier message et d'au moins une partie du contenu du premier message, un dit envoi déclenchant une restitution par le terminal dudit identifiant d'utilisateur du réseau social et de la partie du contenu.

Un terminal communique avec cette entité réseau pour envoyer la demande de consultation de message. Ce terminal comprend
- un module d'envoi d'une demande de consultation d'au moins un message déposé sur demande d'un utilisateur d'un réseau social, *dit utilisateur déposant,* dans une boîte de messagerie d'une ligne téléphonique dont une identification est mémorisée en association avec un identifiant d'utilisateur du réseau social d'un utilisateur de réseau social, dit utilisateur consultant;
- un module de réception et de restitution, par le terminal, d'un identifiant d'utilisateur du réseau social affecté à l'utilisateur déposant dans un réseau social et d'au moins une partie du contenu du premier message.

L'invention permet une consultation de message entre utilisateurs de réseaux sociaux en passant par une boîte de messagerie d'une ligne téléphonique, et cela sans que les utilisateurs aient besoin au préalable de partager leurs identifications de lignes téléphoniques. Seuls les identifiants du réseau social des différents utilisateurs sont requis pour mettre en oeuvre une telle consultation de message.

En effet, lors de la consultation du message, c'est l'identifiant d'utilisateur du réseau social de l'utilisateur déposant qui est utilisé, et non nécessairement l'identification de sa ligne téléphonique, comme c'est le cas habituellement pour les messages déposés dans les boîtes de messagerie de ligne téléphonique. En outre, c'est l'identifiant du réseau social de l'utilisateur consultant qui sert à identifier la ligne téléphonique dont la boîte de messagerie servira pour le dépôt du message.

L'utilisateur destinataire du message n'a donc plus besoin de se connecter au réseau social pour pouvoir recevoir des messages des utilisateurs avec lequel il est en relation dans le réseau social. Il peut consulter ces messages directement dans sa boîte de messagerie, et ce tout en bénéficiant d'une logique d'identification d'utilisateur qui est celle du réseau social. Ainsi il cumule les possibilités qui lui sont apportées par le réseau social en matières de mise en relation avec d'autres utilisateurs et celles d'un système de messagerie, tel que proposé par les opérateurs de lignes téléphoniques, en matière de facilité d'accès et de consultation.

Dans le cas où le premier message a été déposé pour plusieurs destinataires, un mode de réalisation particulier du procédé de consultation est prévu.

Dans ce mode de réalisation, dans lequel le premier message ayant été déposé également dans une boîte de messagerie d'une autre ligne téléphonique dont une identification est mémorisée en association avec un identifiant d'utilisateur du réseau social d'un utilisateur de réseau social, dit utilisateur destinataire, le procédé comprend une étape de réception et de restitution par le terminal d'un identifiant d'utilisateur du réseau social de l'utilisateur destinataire.

Dans le cas où plusieurs messages sont déposés dans la boîte de messagerie, plusieurs modes de réalisation sont possibles.

Dans un mode de réalisation, la demande consultation de message vise la consultation d'une pluralité de messages à restituer successivement selon un ordre spécifié par l'utilisateur consultant, et le procédé comprend, pour chaque message de ladite pluralité de messages traitée dans conformément à l'ordre spécifié, une étape de réception et de restitution par le terminal d'un identifiant d'utilisateur du réseau social de l'utilisateur déposant de ce message et d'au moins une partie du contenu de ce message.

Dans un mode de réalisation, un message déposé dans ladite boîte de messagerie est mémorisé en association avec un identifiant d'utilisateur du réseau social de l'utilisateur déposant et avec un identifiant d'utilisateur du réseau social d'au moins un utilisateur destinataire de ce message.

Dans un mode de réalisation, le procédé comprend une étape d'identification d'au moins un message déposé dans ladite boîte de messagerie par un utilisateur déposant dont un identifiant d'utilisateur du réseau social est indiqué par l'utilisateur consultant.

Dans un mode de réalisation, le procédé comprend une étape d'identification d'au moins un message déposé dans ladite boîte de messagerie à destination d'un utilisateur destinataire dont un identifiant d'utilisateur du réseau social est indiqué par l'utilisateur consultant.

Ainsi la sélection des messages qui seront consultés peut être faite sur la base d'identifiant d'utilisateur de réseaux sociaux qui sont mémorisés en association avec les messages déposés. Ceci est particulièrement commode pour l'utilisateur consultant et permet en outre d'éviter d'avoir à communiquer des informations autres que les identifiants d'utilisateurs de réseaux sociaux des utilisateurs concernés par un message consulté. Un anonymat peut ainsi être préservé dans la mesure où ces identifiants d'utilisateurs de réseaux sociaux peuvent être des pseudonymes ne divulguant pas l'identité réelle des utilisateurs.

Chaque dispositif selon l'invention (entité réseau ou terminal) est conçu pour mettre en oeuvre un ou plusieurs des premier, deuxième, troisième et quatrième aspects de l'invention.

En outre, les différents modes de réalisation qui ont été présentés pour les procédés ou dispositifs sont combinables entre eux pour la mise en oeuvre des premier, deuxième, troisième et/ou quatrième aspects de l'invention.

Selon une implémentation préférée, les différentes étapes d'un procédé selon le premier, deuxième, troisième et/ou quatrième aspect de l'invention sont mises en oeuvre par un logiciel ou programme d'ordinateur.

L'invention concerne ainsi un logiciel ou programme, susceptible d'être exécuté par un ordinateur ou par un processeur de données, ce logiciel / programme comportant des instructions pour commander l'exécution des étapes d'un procédé selon le premier, deuxième, troisième et/ou quatrième aspect de l'invention. Ces instructions sont destinées à être stockées dans une mémoire d'un dispositif informatique, chargées puis exécutées par un processeur de ce dispositif informatique.

Ce logiciel / programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif informatique peut être mis en oeuvre par une ou plusieurs machines physiquement distinctes et présente globalement l'architecture d'un ordinateur, incluant au moins certains des constituants d'une telle architecture: mémoire(s) de données, processeur(s), bus de communication, interface(s) matérielle(s) pour la connexion de ce dispositif informatique à un réseau ou un autre équipement, interface(s) utilisateur, etc.

Le dispositif informatique (entité réseau ou terminal) qui met en oeuvre les différentes étapes d'un procédé selon le premier, deuxième, troisième et/ou quatrième aspect de l'invention est ainsi doté des moyens suivants:
- des moyens de stockage, notamment une mémoire, pour le stockage d'instructions de programme conçues pour commander l'exécution des étapes du procédé concerné
- des moyens de traitement de données, notamment un processeur de données, apte à exécuter les instructions de programme stockées afin de mettre en oeuvre les étapes du procédé concerné.

Ce dispositif informatique (entité réseau ou terminal) qui met en oeuvre les différentes étapes d'un procédé selon le premier, deuxième, troisième aspect et/ou quatrième comprend en outre des moyens de mise en oeuvre des différentes étapes des différents modes de réalisation de ces procédés. Ces moyens sont des modules logiciels (software) et/ou matériels (hardware).

Dans cette optique, le terme "module" correspond dans ce document à un composant logiciel, à un composant matériel ou bien à un ensemble de composants matériels et/ou logiciels, apte à mettre en oeuvre une fonction ou un ensemble de fonctions, selon ce qui est décrit ci-dessous pour le module concerné.

L'invention concerne aussi un support d'informations lisible par un processeur de données, et comportant des instructions d'un des programmes mentionné ci-dessus. Le support d'informations peut être n'importe quelle entité capable de stocker un tel programme.

L'invention sera mieux comprise à la lecture de la description qui suit, donnée à titre d'exemple et faite en référence aux dessins annexés.
La figure 1 représente un système de communication selon un mode de réalisation de la présente invention.
La figure 2 est un organigramme simplifié d'un mode de réalisation d'une phase de configuration initiale, préalable à la mise en oeuvre du procédé de dépôt de message ou du procédé de dépôt de message de réponse.
La figure 3 est un organigramme simplifié d'un mode de réalisation du procédé de demande de dépôt de message, mis en oeuvre côté terminal utilisateur, et du procédé de traitement d'une demande de dépôt de message, mis en oeuvre côté serveur de messagerie et/ou plateforme de service.
La figure 4 est un organigramme simplifié d'un mode de réalisation du procédé de consultation de message, mis en oeuvre côté terminal utilisateur, et du procédé de traitement d'une demande de consultation de message, mis en oeuvre côté serveur de messagerie et/ou plateforme de service.
La figure 5 est un organigramme simplifié d'un mode de réalisation du procédé de demande de dépôt de message de réponse, mis en oeuvre côté terminal utilisateur, et du procédé de traitement d'une demande de dépôt de message de réponse, mis en oeuvre côté serveur de messagerie et/ou plateforme de service.

Dans ce document, les termes 'réseau social' visent tout type de réseau social mis en oeuvre via un réseau de télécommunication, par exemple via le réseau Internet. Un tel réseau social regroupe des communautés de personnes qui échangent à travers une infrastructure de communication, mise en oeuvre par un ou plusieurs serveurs informatiques, par exemple par un ou plusieurs serveurs Web. Les personnes établissent ou déclarent des liens entre elles, sur la base de différents critères, comme par exemple des affinités personnelles, ou encore des proximités de parcours professionnel, ou encore des centres d'intérêts similaires, etc ... On peut citer à titre d'exemple le réseau social fondé sur Facebook ®, Twitter ®, Viadeo ®, LinkedIn®, etc ....

Par terminal, on entend tout dispositif de communication doté d'une interface utilisateur et apte à établir une communication à travers un réseau de télécommunication.

Dans la suite de la description, on utilisera les notions suivantes
- un « utilisateur déposant » est un utilisateur qui formule / initie une demande de dépôt d'un message ;
- un « utilisateur destinataire » est un utilisateur à qui est destiné un message déposé par un utilisateur déposant ; il peut y avoir un ou plusieurs utilisateurs destinataires d'un même message ;
- un « utilisateur consultant » est un utilisateur qui formule / initie une demande de consultation d'un message : il peut s'agir d'un utilisateur déposant de ce message ou d'un utilisateur destinataire de ce message.

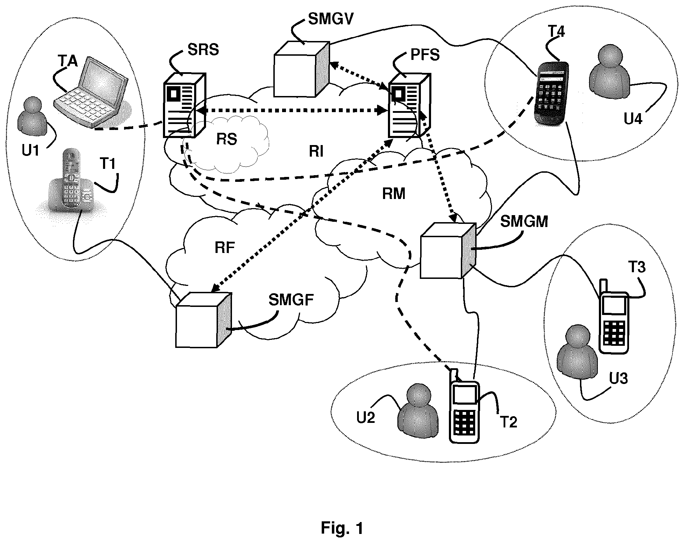

### Figure 1 - Système de communication

La figure 1 représente de manière schématique un système de communication SYS selon un mode de réalisation de la présente invention.

Ce système de communication SYS est articulé autour de plusieurs réseaux de télécommunication, interconnectés les uns avec les autres :
- un réseau RI étendu, (WAN, Wide Area Network), par exemple le réseau Internet ;
- un réseau RM de téléphonie mobile, par exemple un réseau répondant à une norme GSM (*Global System for Mobiles*), UMTS (Universal Mobile Telecommunications System), LTE (*Long Term Evolution*) etc; ce réseau est interconnecté avec le réseau Internet RI de manière à ce que les terminaux compatibles (terminaux 3G ou 4G notamment) avec les accès Internet, puissent accéder à ce réseau Internet RI en passant par le réseau mobile RM ;
- un réseau RF de téléphonie fixe, par exemple un réseau téléphonique commuté (RTC).
- un réseau RV de téléphonie en voix sur IP (VoIP, Voice over IP), utilisant ou non les infrastructures techniques des réseaux RI et RM.

Ce système de communication comprend en outre :
- Un serveur de réseau social SRS, accessible au travers du réseau Internet RI, pour la gestion, l'accès à un réseau social RS et la mise en oeuvre des communications au sein de ce réseau social RS;
- Une plateforme de messagerie PFS associée au réseau social RS, proposant un service de dépôt de message accessible au travers du réseau Internet RI, accessible notamment par tout terminal connecté au réseau Internet RI;
- Un serveur de messagerie SMGM pour le réseau mobile RM, accessible à partir d'un terminal connecté au réseau mobile RM ;
- Un serveur de messagerie SMGF pour le réseau fixe RF, accessible à partir d'un terminal connecté au réseau fixe RF.
- Un serveur de messagerie SMGV pour le réseau VoIP RV, accessible à partir d'un terminal connecté au réseau VoIP RV ;
- Une pluralité de terminaux de communication, T1, T2, T3, T4 utilisés respectivement par des utilisateurs U1, U2, U3, U4.

On suppose ici que les utilisateurs U1, U2, U3, U4 sont tous utilisateurs du réseau social RS : chacun de ces utilisateurs dispose d'un compte utilisateur, enregistré auprès du serveur SRS de réseau social. En outre, l'utilisateur U1 dispose d'un terminal TA, de type ordinateur personnel (PC, personal computer) pour l'accès au réseau Internet RI et au réseau social RS.

### Les terminaux T1, T2, T3, T4

Chacun des terminaux de communication T1, T2, T3, T4 est associé à au moins une ligne téléphonique, référencée respectivement L1, L2, L3, L4. Par ligne téléphonique, on entend ici toute ligne de télécommunication convenant pour l'établissement d'une communication, que cette communication soit audiophonique et/ou visiophonique et/ou textuelle, établie via un réseau de communication mobile et/ou fixe, établie en mode paquet ou en mode circuit, etc. A titre d'exemple purement illustratif, on suppose que :
- le terminal T1 est un téléphone fixe raccordé au réseau fixe RF, associé à une ligne téléphonique fixe L1, câblée, identifiée par un numéro de téléphone fixe : le terminal T1 est conçu pour établir une communication téléphonique en mode circuit au travers du réseau fixe RF ;
- le terminal T2 est un téléphone mobile raccordé au réseau mobile RM en mode circuit, associé à une ligne téléphonique mobile L2, identifiée par un numéro de téléphone mobile, (en général, ce numéro est un numéro MSISDN) : le terminal T2 est conçu pour établir une communication téléphonique en mode circuit au travers du réseau mobile RM;

- le terminal T3 est un téléphone mobile raccordé au réseau mobile RM en mode circuit, associé à une ligne téléphonique mobile L3, identifiée par un numéro de téléphone mobile, (en général, ce numéro est un numéro MSISDN) : le terminal T3 est conçu pour établir une communication téléphonique en mode circuit au travers du réseau mobile RM;
- le terminal T4 est un téléphone mobile raccordé au réseau mobile RM en mode circuit, associé à une ligne téléphonique mobile L4, identifiée par un numéro de téléphone mobile (en général, ce numéro est un numéro MSISDN, Mobile Station International Subscriber Directory Number) : le terminal T4 est conçu pour établir une communication téléphonique en mode circuit au travers du réseau mobile RM ; le terminal T4 est un outre un téléphone bi-mode, doté d'une interface Wi-fi et associé à une ligne téléphonique VoIP, capable d'établir une communication téléphonique en mode paquet en voix sur IP (VoIP, Voice over IP) au travers du réseau Internet, du réseau mobile RM et/ou de cellules Wi-fi d'accès à l'un de ces deux réseaux.

### Les serveurs de messagerie réseau SMGF, SMGM, SMGV

Un service de messagerie est proposé dans le réseau fixe RF. Ce service de messagerie est par exemple un service de messagerie réseau. Les messages et boîtes de messagerie des différentes lignes téléphoniques du réseau fixe sont gérés et stockés par le serveur de messagerie SMGF. Les messages gérés par ce service de messagerie sont le plus souvent des messages audio, voire texte, ces derniers étant consultables sous forme vocalisée. Les messages déposés sont consultables par un utilisateur en établissant au moyen d'un terminal associé à la ligne téléphonique une liaison téléphonique avec le serveur de message SMGF. Le contenu du message est alors transmis vers le terminal sous forme d'un flux audio téléphonique.

En alternative, les messages et la boîte de messagerie d'une ligne téléphonique du réseau fixe RF peuvent être gérés et stockés par un répondeur téléphonique fixe, relié à la ligne téléphonique, et localisé par exemple au domicile de l'utilisateur abonné à cette ligne téléphonique.

Un service de messagerie est également proposé dans le réseau mobile RM. Ce service de messagerie est par exemple un service de messagerie réseau. Les messages et boîtes de messagerie des différentes lignes téléphoniques du réseau fixe sont gérés et stockés par le serveur de messagerie SMGM. Les messages gérés par ce service de messagerie sont des messages audio, texte et/ou vidéo. Ici aussi, les messages déposés sont consultables par un utilisateur en établissant au moyen d'un terminal associé à la ligne téléphonique une liaison téléphonique avec le serveur de messagerie SMGF. Le contenu du message est alors transmis vers le terminal sous forme d'un flux audio téléphonique.

Un service de messagerie est également proposé dans le réseau VoIP RV. Ce service de messagerie est par exemple un service de messagerie réseau : les messages et boîtes de messagerie des différentes lignes téléphoniques du réseau fixe étant gérés et stockés par le serveur de messagerie SMGV. Les messages gérés par ce service de messagerie sont des messages audio, texte, et/ou vidéo.

Pour la mise en oeuvre du procédé de consultation de message, chacun des serveurs de messagerie SMGF, SMGM, SMGV est en charge de la réception et du traitement d'une demande de consultation de message, de la transmission des informations associées à ce message et de la réception et du traitement d'une éventuelle demande de réponse à un message consulté.

### Le serveur SRS de réseau social

Le serveur SRS de réseau social met en oeuvre un service de réseau social pour un ou plusieurs réseaux sociaux. Dans l'exemple décrit ici, le réseau social est accessible au travers du réseau Internet RI: un utilisateur se connecte à ce réseau social en chargeant sur son terminal une page Web, correspondant à une adresse URL donnée, faisant partie du domaine Web du réseau social.

Le serveur SRS de réseau social se comporte comme tout serveur web : il transmet une page Web à chaque terminal suite à une requête Web émises par ce terminal vers ce serveur.

Le serveur SRS de réseau social est notamment en charge de contrôler l'accès au réseau social. En particulier, le serveur SRS de réseau social contrôle l'accès au réseau social à partir de données d'authentification saisies par l'utilisateur dans une page Web. Les données d'authentification d'un utilisateur comprennent un identifiant d'utilisateur de réseau social (par exemple, une adresse email de cet utilisateur), et au moins une donnée d'authentification de l'utilisateur (par exemple un mot de passe associé à son adresse email) : ces données d'authentification sont mémorisées par le serveur SRS de réseau social.

En pratique, tout type d'identifiant qui permet d'identifier sans équivoque un compte utilisateur d'une personne utilisatrice d'un réseau social est utilisable pour la mise en oeuvre de l'invention. En général, il s'agit d'une référence définie par l'utilisateur au moment de la création de son compte utilisateur. Cette référence peut être une adresse email, une chaîne de caractères et/ou une image, photo, etc. On suppose dans la suite de la description que les utilisateurs U1, U2, U3 et U4 utilisent respectivement des identifiants d'utilisateur de réseau social notés id1, id2, id3 et id4.

Chaque utilisateur de réseau social définit en outre au moins un pseudonyme, ou identifiant d'emprunt, sous lequel cet utilisateur sera connu dans le réseau social par les autres utilisateurs avec lesquels cet utilisateur entre en communication au travers du réseau social. Ce pseudonyme peut être une chaîne de caractères alphanumériques et/ou une image, une photo, etc. Ce pseudonyme est un identifiant d'utilisateur de réseau social utilisable pour la mise en oeuvre des différents procédés décrits dans ce document.

L'avantage lié à l'utilisation de ce pseudonyme est qu'il rend anonyme les échanges de cet utilisateur avec les autres utilisateurs du réseau social : la véritable identité de l'utilisateur n'est pas déductible de ce seul pseudonyme. De même, l'adresse email de cet utilisateur ou son numéro de téléphone, ou plus généralement ses coordonnées téléphoniques ou postales ou adresses électroniques, ne sont pas déductibles de ce seul pseudonyme. Dans la suite de ce document, on parlera donc, concernant ce pseudonyme, d'identifiant anonymisé d'utilisateur de réseau social.

On suppose que les utilisateurs U1, U2, U3 et U4 utilisent respectivement les pseudonymes *idps1, idps2, idps3* et *idps4*.

A la différence des identifiants *id1, id2, id3, id4* qui sont uniques - au sens où un compte utilisateur et un seul est identifié par un de ces identifiants - les pseudonymes peuvent ne pas être uniques au sein d'un réseau social donné : il est parfois possible qu'un pseudonyme soit utilisé par plusieurs utilisateurs. La distinction entre les différents utilisateurs de même pseudonyme peut être faite par exemple sur la base d'une image (photo) ou d'informations qu'ils publient sur eux-mêmes en association avec leur pseudonyme.

Le serveur SRS de réseau social est également en charge de mémoriser, dans une base de données DB associée, les données de profil et autres paramètres associés aux utilisateurs inscrits auprès du service de réseau social. Dans les données de profils se trouvent des données publiques et des données privées : les données publiques mises à disposition des autres utilisateurs qui entrent en contact avec cet utilisateur, afin d'informer ces autres utilisateurs sur la personnalité de l'utilisateur, son profil professionnel ou ses goûts, etc. Tandis que les données privées ne sont ni transmises ni accessibles par un autre utilisateur du réseau social. Les données privées sont cependant utilisées par le serveur SRS de réseau social pour la mise en oeuvre de différents services.

Parmi les données privées, le serveur SRS de réseau social stockent notamment pour chaque utilisateur qui le souhaite, une identification de ligne téléphonique à utiliser pour le dépôt de message à destination de cet utilisateur. Cette identification de ligne téléphonique doit être présente pour chaque utilisateur destinataire d'un message, et de préférence, pour chaque utilisateur déposant d'un message, afin de permettre à un utilisateur destinataire d'un message en provenance de cet utilisateur déposant, de demander le dépôt d'un message de réponse à ce message.

### La plateforme de messagerie PFS

La plateforme de messagerie PFS associée au réseau social RS, est accessible au travers du réseau Internet RI, par un terminal ou serveur connecté au réseau Internet RI. Cette plateforme de messagerie PFS met en oeuvre un service d'enregistrement et de dépôt de messages.

Dans le cas où l'utilisateur déposant le message et/ou l'utilisateur destinataire de ce message reste anonyme du fait qu'il est identifié lors de la consultation ou du dépôt de message par un pseudonyme ne divulguant pas son identité réelle, le service mis en oeuvre par la plateforme de messagerie PFS est un service de dépôt de messages anonymisés. Ces messages seront ainsi aussi anonymisés lors de leur consultation. L'utilisateur déposant le message et/ou l'utilisateur destinataire de ce message est dans ce cas connu des autres utilisateurs uniquement par un identifiant anonymisé d'utilisateur de réseau social, notamment par son pseudonyme. En particulier, l'identification de la ligne téléphonique d'un utilisateur destinataire ou déposant n'est jamais divulguée aux autres utilisateurs avec lesquels il échange des messages au moyen d'un des procédés décrits dans ce document.

Pour la mise en oeuvre du procédé de traitement d'une demande de dépôt de message (que ce soit pour un message initial, voire pour un message de réponse à un message initial / antérieur déposé par l'intermédiaire de cette plateforme de messagerie PFS), la plateforme de messagerie PFS est en charge de la réception et du traitement d'une demande de dépôt de message, de l'enregistrement du message et des informations associées à ce message et la commande des différents serveurs de messagerie SMGF, SMGM, SMGV qui vont effectuer le dépôt du message dans une ou plusieurs boîtes de messagerie.

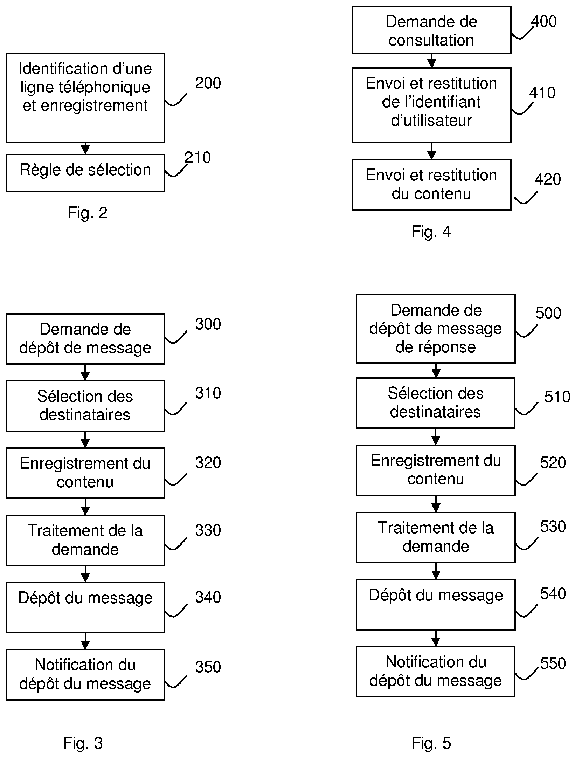

### Figure 2 - Configuration du profil utilisateur

### Identification de la ligne téléphonique - Etape 200

Dans le cadre de la mise en oeuvre de l'invention, le serveur SRS de réseau social est conçu pour mémoriser (étape 200), dans la base de données DB, dans les données privées mémorisées pour un utilisateur, en association avec un identifiant d'un utilisateur dans le réseau social, une identification d'au moins une ligne téléphonique. Cette identification de ligne téléphonique est utilisable pour déposer, dans la boîte de messagerie associée à cette ligne téléphonique, un message à destination de cet utilisateur. L'identification de ligne téléphonique faisant partie des données privées d'un utilisateur donné, elle n'est pas connue des utilisateurs qui entrent en contact avec lui au travers du réseau social. Ces données privées constituent un sous-ensemble de son profil utilisateur, en quelque sorte un profil « privé » de l'utilisateur.

Chaque utilisateur du réseau social peut déclarer, au moyen d'un terminal connecté au réseau Internet RI, une identification d'une ou plusieurs lignes téléphoniques à mémoriser dans les données privées de son profil d'utilisateur de réseau social.

Dans ce but, une page Web accessible dans le réseau social RS et fournie par le serveur SRS de réseau social, est chargée par un navigateur Web exécuté par le terminal. L'utilisateur saisit (étape 200) alors l'identification de la ligne téléphonique et demande l'enregistrement de cette identification dans les données privées de son profil d'utilisateur de réseau social.

Chaque identification de ligne téléphonique saisie est alors transmise lors de l'étape 200 par le terminal de l'utilisateur au serveur SRS de réseau social, pour être stockée dans la base de données DB associée à ce serveur SRS de réseau social.

Un tel identifiant de ligne téléphonique peut être un identifiant associé à un terminal de communication dans un réseau de communication auquel ce terminal accède. Cet identifiant sert à identifier le terminal de communication dans le réseau de communication considéré lors de l'établissement d'une communication avec ce terminal de communication. Un tel identifiant peut être un numéro de téléphone dans un réseau de téléphonie mobile ou fixe, ou encore une adresse IP dans un réseau de Voix sur IP.

Dans certains cas, un identifiant de ligne téléphonique peut être associé à plusieurs terminaux de communication. C'est le cas notamment de terminaux qui sont connectés à une passerelle domestique d'un réseau domestique et qui sont plusieurs à être déclarés de manière à recevoir un appel émis vers un même numéro de téléphone. Dans ce cas, la passerelle est susceptible de notifier un appel téléphonique qu'elle reçoit vers l'un quelconque des terminaux ainsi déclarés.

On suppose dans la suite de la description que les utilisateurs U1, U2, U3 et U4 ont fourni chacun au moins une identification de ligne téléphonique, associée à leur identifiant d'utilisateur de réseau social *idps1, idps2, idps3* et *idps4* et/ou *id1, id2, id3, id4*: l'identification de ces lignes téléphoniques sont notées *idcom1, idcom2, idcom3* et *idcom4.* On suppose en outre que l'utilisateur U4 a fourni au serveur SRS de réseau social une deuxième de ligne téléphonique notée *idcom4bis.*

### Règle de sélection d'une ligne téléphonique - Etape 210

Lorsque plusieurs lignes de télécommunication sont définies pour un même identifiant d'utilisateur de réseau social, le serveur SRS de réseau social sélectionne une ligne téléphonique en fonction d'au moins un critère de sélection. Le serveur SRS de réseau social est également conçu pour mémoriser (étape 210), dans une base de données DB associée à ce serveur, dans les données privées du profil d'un utilisateur de réseau social, en association avec un identifiant d'un utilisateur dans le réseau social, une règle de sélection de ligne téléphonique définie à partir d'un ou plusieurs critères de sélection.

Un premier exemple de critère de sélection est un critère défini relativement à au moins une plage temporelle: selon la plage temporelle pendant laquelle une demande de dépôt de message est reçue, ce sera une ligne téléphonique particulière qui sera choisie ou sinon une autre ligne téléphonique. Par exemple, pour les demandes de dépôt de message parvenant le week-end, la ligne téléphonique privée sera sélectionnée. Tandis que pour les autres demandes, la ligne téléphonique professionnelle sera sélectionnée.

Un deuxième exemple critère de sélection est un critère défini relativement au lien existant dans le réseau social entre l'utilisateur déposant d'un message et l'utilisateur destinataire de ce message. Par exemple, si la relation entre ces deux utilisateurs est de nature professionnelle, alors la ligne téléphonique choisie sera une ligne téléphonique à usage professionnel. Par contre, si les deux utilisateurs sont déclarés comme amis dans le réseau social alors c'est la ligne téléphonique à usage privée qui sera choisie.

En généralisant, chaque utilisateur ayant fourni une identification de plusieurs lignes téléphoniques à utiliser pour le dépôt de message peut ainsi définir au moins un critère de sélection d'une ligne téléphonique.

Dans ce but, une page Web accessible dans le réseau social RS et fournie par le serveur SRS de réseau social, est chargée par un navigateur Web exécuté par le terminal de l'utilisateur. L'utilisateur saisit alors les paramètres d'un ou de plusieurs critères de sélection, définissant ainsi une règle de sélection. Puis l'utilisateur demande l'enregistrement de ces paramètres dans les données privées de son profil d'utilisateur de réseau social.

Chaque paramètre d'un critère de sélection est alors transmis lors de l'étape 210 par le terminal de l'utilisateur au serveur SRS de réseau social, pour être stockée dans une base de données DB associée à ce serveur SRS de réseau social.

Le ou les critères de sélection sont fonction par exemple de l'utilisateur destinataire du message à déposer et/ou l'utilisateur déposant du message à déposer, de la plage temporelle de dépôt du message, de la localisation géographique de l'utilisateur destinataire et/ou déposant du message à déposer, du lien dans le réseau social entre l'utilisateur destinataire et/ou l'utilisateur déposant du message à déposer, etc. Une ligne téléphonique par défaut peut également être désignée par l'utilisateur.

### Figure 3 - Procédé de dépôt de message.

Différents modes de réalisation d'un procédé de demande de dépôt de message, mis en oeuvre par un terminal d'un utilisateur, et d'un procédé de traitement d'une demande de dépôt de message, mis en oeuvre par une ou plusieurs entités réseaux parmi le serveur SRS de réseau social, la plateforme de messagerie PFS et/ou les serveurs de messagerie SMGF, SMGM, SMGV, sont décrits par référence à la figure 3.

### Formulation de la demande de dépôt de message - Etapes 300 et 310 - Premier mode de réalisation avec demande d'établissement de communication préalable

Dans un premier mode de réalisation, la demande de dépôt de message fait suite à une demande d'établissement de communication téléphonique entre un utilisateur déposant, appelant, et au moins un utilisateur appelé, sélectionné parmi des utilisateurs de réseau social. En cas de non réponse d'au moins un utilisateur appelé visé dans la demande d'établissement de communication téléphonique, la demande de dépôt de message est émise automatiquement (étape 300) par l'entité réseau qui traite la demande d'établissement de communication téléphonique : la demande de dépôt de message est envoyée pour traitement par exemple à la plateforme de messagerie PFS ou directement à un serveur de messagerie. Dans ce premier mode de réalisation, les identifiants d'utilisateur de réseau social des utilisateurs destinataires du message à déposer sont obtenus par la plateforme de messagerie PFS ou le serveur de messagerie : ils correspondent aux identifiants d'utilisateur de réseau social fournis avec la demande d'établissement de communication pour lesquels une non réponse de l'utilisateur a été détectée.

### Formulation de la demande de dépôt de message - Etapes 300 et 310 - Deuxième mode de réalisation sans demande d'établissement de communication préalable.

Dans un deuxième mode de réalisation, un utilisateur déposant, souhaitant déposer un message, formule (étape 300) expressément une demande de dépôt de message en utilisant un service de demande de dépôt de message pour formuler sa demande de dépôt de message. Des informations sur la demande de dépôt de message sont également transmises, après, avant ou avec la demande de dépôt de message ou encore en tant que données constitutives de la demande de dépôt de message. La demande de dépôt de message et les informations associées sont envoyées (étape 310) depuis un terminal de l'utilisateur vers l'entité réseau qui traite la demande de dépôt de message : serveur SRS de réseau social, plateforme de messagerie PFS ou un des serveurs de messagerie SMGF, SMGM, SMGV. Ces informations contiennent notamment un identifiant d'utilisateur de réseau social de chaque utilisateur destinataire du message à déposer et un identifiant d'utilisateur de réseau social de l'utilisateur déposant.

Plusieurs variantes de ce deuxième mode de réalisation sont présentées ci-dessous.

Dans une première variante de ce deuxième mode de réalisation, le service de demande de dépôt de message est intégré dans un service de réseau social géré par le serveur SRS de réseau social.

L'utilisateur déposant se connecte au moyen de son terminal au serveur SRS de réseau social pour formuler sa demande de dépôt de message et fournir les informations nécessaires sur le ou les utilisateurs destinataires et le contenu du message.

Par exemple, l'utilisateur déposant se connecte sur une page Web du réseau social et formule sa demande en utilisant cette page Web. En particulier, il sélectionne (étape 310) les utilisateurs destinataires du message et/ou saisit les informations demandées : pseudonyme des utilisateurs destinataires, pseudonyme de l'utilisateur déposant à utiliser pour effectuer le dépôt du message, et optionnellement le contenu du message à déposer.

Dans cette première variante de ce deuxième mode de réalisation, la page Web utilisée pour la formulation de la demande de dépôt de message contient par exemple des outils de recherche d'utilisateurs dans le réseau social. Par exemple, il est présenté (étape 310) à l'utilisateur déposant une liste d'utilisateurs du réseau social afin de proposer à cet utilisateur de sélectionner un ou plusieurs utilisateurs dans cette liste d'utilisateurs. Cette liste d'utilisateurs comprend par exemple tous les utilisateurs reliés avec l'utilisateur déposant au travers du réseau social, quelle que soit la nature du lien, ou bien tous les utilisateurs reliés avec l'utilisateur déposant au travers du réseau social pour lesquels le lien avec l'utilisateur déposant répond à un critère défini, ou bien tous les utilisateurs répondant à un critère de recherche défini par l'utilisateur déposant, etc. Ainsi un moteur de recherche d'un utilisateur dans le réseau social peut être mis à disposition sur la page Web servant à définir une demande de dépôt de message.

Lorsque l'identifiant d'utilisateur de réseau social fourni par l'utilisateur déposant pour un des utilisateurs destinataires du message n'est pas unique (cas d'un pseudonyme utilisé par plusieurs utilisateurs), le serveur SRS de réseau social dispose d'un identifiant unique d'utilisateur de réseau social qui identifie chacun des contacts choisis comme destinataires du message par l'utilisateur déposant et peut donc identifier de manière non ambiguë ces utilisateurs destinataires.

Les identifiants d'utilisateur de réseau social des utilisateurs choisis par l'utilisateur déposant en tant qu'utilisateurs destinataires du message à déposer sont transmis lors de l'étape 310 du terminal de l'utilisateur au serveur SRS de réseau social.

Dans cette première variante de ce deuxième mode de réalisation, les informations accompagnant la demande de dépôt de message, telle que formulée par l'utilisateur déposant, contiennent au moins:
- pour l'utilisateur déposant, un identifiant d'utilisateur de réseau social (idps1, par exemple pour l'utilisateur U1) sous lequel l'utilisateur déposant (U1) est connu des utilisateurs destinataires (le pseudonyme, en général);
- pour chaque utilisateur destinataire, un identifiant d'utilisateur de réseau social (idps2, par exemple pour l'utilisateur U2) sous lequel cet utilisateur destinataire (U2) est connu de l'utilisateur déposant (le pseudonyme, en général).

Les informations accompagnant la demande de dépôt de message seront ensuite fournies au serveur de messagerie qui effectuera le dépôt du message, pour être stockées en association avec le contenu du message.

Des informations supplémentaires sont ensuite obtenues par le serveur SRS de réseau social pour effectuer le traitement de la demande de dépôt de message, par exemple:
- pour l'utilisateur déposant, une identification de ligne téléphonique (idcom1, par exemple pour l'utilisateur U1) mémorisée en association avec l'identifiant d'utilisateur de réseau social fourni dans la demande de dépôt de message, et, optionnellement, un identifiant unique d'utilisateur de réseau social (id1, par exemple pour l'utilisateur U1) ;
- pour chaque utilisateur destinataire, une identification de ligne téléphonique (idcom2, par exemple pour l'utilisateur U2) mémorisée en association avec l'identifiant d'utilisateur de réseau social fourni dans la demande de dépôt de message, et, optionnellement, un identifiant unique d'utilisateur de réseau social (id2, par exemple pour l'utilisateur U2).

Dans cette première variante de ce deuxième mode de réalisation, le serveur SRS de réseau social reçoit la demande de dépôt de message et les informations qui l'accompagnent puis transmet la demande à la plateforme de messagerie PFS pour traitement. L'étape 330 de traitement de cette demande de dépôt de message est décrite plus en détail ci-dessous.

Ces informations supplémentaires seront également fournies au serveur de messagerie qui effectuera le dépôt du message, pour être stockées en association avec le contenu du message, afin notamment de traiter une éventuelle demande de réponse au message à déposer.

Dans une deuxième variante de ce deuxième mode de réalisation, le service de demande de dépôt de message est réalisé en dehors du réseau social. Il est par exemple mis en oeuvre au moyen d'une page Web d'un serveur Web SRW, gérant un domaine Web distinct de celui du réseau social. Il peut s'agir d'un serveur Web, proposant un service de dépôt de message pour les utilisateurs d'un ou de plusieurs réseaux sociaux. Ce serveur Web SRW est alors relié via le réseau Internet RI à la plateforme de messagerie PFS, afin de transmettre à cette plateforme une demande de dépôt de message formulée par un utilisateur via une page Web.

En alternative, au lieu d'utiliser un serveur Web SRW, l'utilisateur qui souhaite déposer un message charge une application logicielle sur son terminal : cette application est conçue pour communiquer au travers du réseau Internet RI avec la plateforme de messagerie PFS afin de transmettre à cette plateforme une demande de dépôt de message formulée par un utilisateur.

Dans cette deuxième variante de ce deuxième mode de réalisation, l'utilisateur déposant se donc connecte à la plateforme de messagerie PFS au moyen d'un terminal, en utilisant une application logicielle sur son terminal ou en passant par un serveur Web SRW intermédiaire, puis cet utilisateur formule sa demande de dépôt de message. Par exemple, il saisit les informations demandées : pseudonyme des utilisateurs destinataires, pseudonyme de l'utilisateur déposant à utiliser pour effectuer le dépôt du message, et optionnellement le contenu du message à déposer. L'identification du réseau social relativement auquel sont définis les pseudonymes peut également lui être demandée, lorsque l'application et le serveur Web SRW sont utilisés pour plusieurs réseaux sociaux.

Dans cette deuxième variante de ce deuxième mode de réalisation, la page Web ou l'application logicielle utilisée pour la formulation de la demande de dépôt de message peut également contenir des outils de recherche d'utilisateurs dans un ou plusieurs réseaux sociaux. Comme dans le premier mode de réalisation, il est proposé à l'utilisateur déposant de sélectionner un ou plusieurs utilisateurs dans une liste d'utilisateurs du réseau social. La plateforme de messagerie PFS ou le serveur web SRW utilisée pour la formulation de la demande de dépôt de message sera dans ce deuxième mode de réalisation reliée au serveur SRS de réseau social ou à une base de données DB associée afin de disposer d'un accès à une liste d'utilisateurs du réseau social et de constituer une liste d'utilisateurs du réseau social à présenter à l'utilisateur déposant.

Lorsque l'identifiant d'utilisateur de réseau social fourni par l'utilisateur déposant pour un des utilisateurs destinataires du message n'est pas unique (cas d'un pseudonyme utilisé par plusieurs utilisateurs), des données d'authentification de l'utilisateur déposant dans le réseau social seront alors demandées à l'utilisateur déposant, puis transmises par le plateforme de messagerie PFS au serveur SRS de réseau social pour identification de cet utilisateur déposant. Il sera alors possible d'identifier des utilisateurs du réseau social qui sont en contact avec cet utilisateur déposant dans le réseau social et d'identifier sans équivoque les utilisateurs destinataires sélectionnés par cet utilisateur, quitte à demander à l'utilisateur de préciser son choix si plusieurs utilisateurs destinataires de même pseudonyme sont en contact avec l'utilisateur déposant via le réseau social.

Les identifiants d'utilisateur de réseau social des utilisateurs choisis par l'utilisateur déposant en tant qu'utilisateurs destinataires du message à déposer sont transmis lors de l'étape 310 du terminal de l'utilisateur à la plateforme de messagerie PFS.

Dans cette deuxième variante de ce deuxième mode de réalisation, les informations accompagnant la demande de dépôt de message, telle que formulée par l'utilisateur déposant, contiennent au moins:
- pour l'utilisateur déposant, un identifiant d'utilisateur de réseau social (idps1, par exemple pour l'utilisateur U1) sous lequel l'utilisateur déposant (U1) est connu des utilisateurs destinataires (le pseudonyme, en général);
- pour chaque utilisateur destinataire, un identifiant d'utilisateur de réseau social (idps2, par exemple pour l'utilisateur U2) sous lequel cet utilisateur destinataire (U2) est connu de l'utilisateur déposant (le pseudonyme, en général).

La plateforme de messagerie PFS est conçue pour communiquer avec le serveur SRS de réseau social, ou une base de données DB associée à ce serveur, afin d'obtenir des informations supplémentaires, notamment les identifications de ligne téléphonique pour lesquelles des dépôts de message seront commandés par la plateforme de messagerie PFS.

Ces informations supplémentaires contiennent:
- pour l'utilisateur déposant, une identification de ligne téléphonique (idcom1, par exemple pour l'utilisateur U1) mémorisée en association avec l'identifiant d'utilisateur de réseau social fourni dans la demande de dépôt de message, et, optionnellement un identifiant unique d'utilisateur de réseau social (id1, par exemple pour l'utilisateur U1) ;
- pour chaque utilisateur destinataire, une identification de ligne téléphonique (idcom2, par exemple pour l'utilisateur U2) mémorisée en association avec l'identifiant d'utilisateur de réseau social fourni dans la demande de dépôt de message, et, optionnellement un identifiant unique d'utilisateur de réseau social (id2, par exemple pour l'utilisateur U2).

Dans cette deuxième variante de ce deuxième mode de réalisation, lorsque le serveur Web intermédiaire SRW ou l'application réceptionne la demande de dépôt de message et les informations qui l'accompagnent, il/elle transmet toutes ces données à la plateforme de messagerie PFS pour traitement de la demande de dépôt de message par cette plateforme. L'étape 330 de traitement de cette demande de dépôt de message est décrite plus en détail ci-dessous.

Ces informations supplémentaires seront également fournies au serveur de messagerie qui effectuera le dépôt du message, pour être stockées en association avec le contenu du message, afin notamment de traiter une éventuelle demande de réponse au message à déposer.

Dans une troisième variante de ce deuxième mode de réalisation, le service de demande de dépôt de message est intégré dans un service de messagerie d'un opérateur de réseau téléphonique. L'utilisateur se connecte à ce service au moyen d'un terminal téléphonique. Contrairement aux premier et deuxième de réalisation décrit ci-dessus, où la plateforme de messagerie PFS reçoit et traite la demande de dépôt de message, c'est donc ici directement un serveur de messagerie SMGF, SMGM ou SMGV qui reçoit la demande de dépôt de message et la traite.

L'utilisateur déposant se connecte au moyen de son terminal au serveur de messagerie pour formuler sa demande de dépôt de message et fournir les informations nécessaires sur le ou les utilisateurs destinataires et le contenu du message.

Par exemple, l'utilisateur déposant se connecte à un serveur vocal faisant partie du serveur de messagerie, puis fournit vocalement les informations demandées : pseudonyme des utilisateurs destinataires, pseudonyme de l'utilisateur déposant à utiliser pour effectuer le dépôt du message, contenu vocal du message à déposer. L'identification du réseau social relativement auquel sont définis les pseudonymes peut également lui être demandée.

Le serveur vocal interroge alors le serveur SRS de réseau social ou une base de données DB associée pour identifier, parmi les utilisateurs du réseau social qui sont en relation avec l'utilisateur déposant, celui ou ceux dont le pseudonyme, tel que mémorisé dans le profil utilisateur, ressemble après vocalisation à celui ou ceux prononcés par l'utilisateur. Le serveur vocal renvoie alors un flux vocal contenant le ou les pseudonymes vocalisés pour lesquels une ressemblance a été trouvée. Puis l'utilisateur valide son choix d'utilisateur destinataire en confirmant ou infirmant, par exemple par appui de touche, provoquant par exemple une émission de signaux DTMF, ou en prononçant des mots clefs (« oui » ou « non »).

Dans cette troisième variante de ce deuxième mode de réalisation, les informations accompagnant la demande de dépôt de message, telle que formulée par l'utilisateur déposant, contiennent au moins:
- pour l'utilisateur déposant, un identifiant d'utilisateur de réseau social (idps1, par exemple pour l'utilisateur U1) sous lequel l'utilisateur déposant (U1) est connu des utilisateurs destinataires (le pseudonyme, en général);
- pour chaque utilisateur destinataire, un identifiant d'utilisateur de réseau social (idps2, par exemple pour l'utilisateur U2) sous lequel cet utilisateur destinataire (U2) est connu de l'utilisateur déposant (le pseudonyme, en général).

Les identifiants d'utilisateur de réseau social des utilisateurs choisis au final par l'utilisateur déposant en tant qu'utilisateurs destinataires du message à déposer sont obtenus lors de l'étape 310 par le serveur de messagerie.

Dans cette troisième variante de ce deuxième mode de réalisation, le serveur de messagerie qui reçoit la demande de dépôt de message et les informations qui l'accompagnent, traite directement la demande de dépôt de message, sans passer par la plateforme de messagerie PFS.

Lorsque l'identifiant d'utilisateur de réseau social fourni par l'utilisateur déposant pour un des utilisateurs destinataires du message n'est pas unique (cas d'un pseudonyme utilisé par plusieurs utilisateurs), des données d'authentification de l'utilisateur déposant dans le réseau social seront alors demandées à l'utilisateur déposant, puis transmises au serveur SRS de réseau social pour identification de cet utilisateur déposant. Il sera alors possible d'identifier des utilisateurs du réseau social qui sont en contact avec cet utilisateur déposant dans le réseau social et d'identifier sans équivoque les utilisateurs destinataires sélectionnés par cet utilisateur, quitte à demander à l'utilisateur de préciser son choix si plusieurs utilisateurs destinataires de même pseudonyme sont en contact avec l'utilisateur déposant.

Le serveur de messagerie SMGF, SMGM ou SMGV devra donc interroger, directement ou en passant par la plateforme de messagerie PFS, le serveur SRS de réseau social ou une base de données DB associée, pour obtenir les informations sur les identifications des lignes téléphoniques mémorisées en association avec chaque identifiant d'utilisateur de réseau social utilisé dans la demande de dépôt de message, notamment pour identifier la ou les boîtes de messagerie qui devront stocker le message à déposer.

Ces informations suivantes, obtenues par le serveur de messagerie SMGF, SMGM ou SMGV pour effectuer le traitement de la demande de dépôt de message, contiennent ainsi:
- pour l'utilisateur déposant, une identification de ligne téléphonique (idcom1, par exemple pour l'utilisateur U1) mémorisée en association avec l'identifiant d'utilisateur de réseau social fourni dans la demande de dépôt de message, et, optionnellement un identifiant unique d'utilisateur de réseau social (id1, par exemple pour l'utilisateur U1) ;
- pour chaque utilisateur destinataire, une identification de ligne téléphonique (idcom2, par exemple pour l'utilisateur U2) mémorisée en association avec l'identifiant d'utilisateur de réseau social fourni dans la demande de dépôt de message, et, optionnellement un identifiant unique d'utilisateur de réseau social (id2, par exemple pour l'utilisateur U2).

Ces informations supplémentaires seront stockées en association avec le contenu du message, afin notamment de traiter une éventuelle demande de réponse au message à déposer.

Dans cette troisième variante de ce deuxième mode de réalisation, c'est donc un serveur de messagerie qui réceptionne et traite la demande de dépôt de message et les informations qui l'accompagnent. L'étape 330 de traitement de cette demande de dépôt de message est décrite plus en détail ci-dessous.

### Enregistrement du contenu du message à déposer - Etape 320

L'entité réseau (soit la plateforme de messagerie PFS, soit un serveur de messagerie SMGF, SMGM ou SMGV) qui reçoit et traite la demande de dépôt de message est en charge d'obtenir les données du contenu du message à déposer ainsi que les informations à enregistrer en association avec ce message à déposer.

Les informations à enregistrer comprennent notamment un identifiant d'utilisateur de réseau social de l'utilisateur déposant du message à déposer et un identifiant d'utilisateur de réseau social du ou des utilisateurs destinataires du message à déposer. Ces informations sont fournies sous forme textuelle ou vocale, voire sous forme d'image, au serveur de messagerie SMGF, SMGM ou SMGV qui effectue le dépôt de message : elles seront utilisées pour notifier le ou les utilisateurs destinataires du message du dépôt du message.

Les informations supplémentaires, à enregistrer en association avec ce message à déposer (identifications de ligne téléphonique, et, optionnellement, les identifiants uniques d'utilisateur de réseau social), sont fournies sous forme de chaîne de caractères au serveur de messagerie SMGF, SMGM ou SMGV qui effectue le dépôt de message. Ces informations supplémentaires ne sont pas connues de l'utilisateur déposant et/ou des utilisateurs destinataires du message et leur sont pas accessibles : elles sont donc mémorisées par le serveur de messagerie sans jamais être communiquées à un utilisateur.

L'étape 320 d'enregistrement du contenu du message peut être effectuée, avant ou après ou simultanément aux étapes 300 et 310 de formulation de la demande de dépôt de message et d'envoi des informations qui l'accompagnent.

Concernant l'enregistrement du contenu (texte, vocal ou visuel) du message, plusieurs modes de réalisation sont possibles.

Dans un premier mode de réalisation, utilisable lorsque l'entité réseau qui réceptionne la demande de dépôt de message est la plateforme de messagerie PFS, le contenu du message est enregistré dans une mémoire du terminal de l'utilisateur déposant et un fichier de données incorporant ce contenu est transmis par ce terminal au serveur SRS de réseau social qui le retransmet à la plateforme de messagerie PFS, ou bien est transmis par ce terminal directement à la plateforme de messagerie PFS.

Dans un deuxième mode de réalisation, particulièrement adapté lorsque l'entité réseau est un serveur de messagerie SMGF, SMGM ou SMGV) les données du contenu du message sont générées sur le terminal (par exemple, avec un microphone et un logiciel de capture de son), le flux de données ainsi capturées est transmis en temps réel à cette entité réseau pour être enregistré par cette entité réseau dans une mémoire de cette entité réseau.

### Réception et traitement de la demande de dépôt de message - Etape 330

L'entité réseau qui réceptionne une demande de dépôt de message est le serveur SRS de réseau social et/ou la plateforme de messagerie PFS et/ou un serveur de messagerie SMGM, SMGF et SMGV. Ces entités réseau peuvent notamment coopérer pour effectuer ce traitement.

Cette entité réseau reçoit une demande de dépôt d'un message destiné à au moins un utilisateur destinataire, utilisateur de réseau social, qui est identifié au moyen d'au moins un identifiant d'utilisateur de réseau social, accompagnant la demande de dépôt de message. L'utilisateur déposant est également identifié au moyen d'un identifiant d'utilisateur de réseau social.

Cette entité réseau obtient également, pour chaque utilisateur destinataire du message à déposer, une identification d'au moins une ligne téléphonique associée à cet identifiant d'utilisateur de réseau social, par exemple par interrogation du serveur SRS de réseau social.

Pour chaque utilisateur destinataire, la ligne téléphonique identifiée est une ligne téléphonique dont une identification a été mémorisée en association avec un identifiant d'utilisateur de réseau social affecté à l'utilisateur destinataire concerné.

Lorsque plusieurs lignes téléphoniques sont mémorisées en association avec un identifiant d'utilisateur de réseau social affecté à un utilisateur destinataire, la ligne téléphonique identifiée est sélectionnée, par exemple par le serveur SRS de réseau social, parmi ces différentes lignes téléphoniques en fonction d'au moins une règle de sélection définie par l'utilisateur de réseau social concerné et mémorisée par le serveur SRS de réseau social. Cette règle de sélection utilise par exemple un critère relatif au lien dans le réseau social entre l'utilisateur déposant et l'utilisateur destinataire concerné. Selon un autre exemple, ce critère est un critère relatif à l'utilisateur déposant du message et/ou à l'utilisateur destinataire.

A l'étape 340, a lieu le dépôt du message dans une boîte de messagerie associée à la ligne téléphonique ainsi identifiée.

Sont mémorisées, en association avec le message déposé, les informations suivantes :
- pour l'utilisateur déposant, un identifiant d'utilisateur de réseau social (idps1, par exemple pour l'utilisateur U1) sous lequel l'utilisateur déposant (U1) est connu des utilisateurs destinataires (le pseudonyme, en général) ainsi qu'une identification de ligne téléphonique (idcom1, par exemple), mémorisée en association avec cet identifiant d'utilisateur de réseau social;
- pour chaque utilisateur destinataire, un identifiant d'utilisateur de réseau social (idps2, par exemple pour l'utilisateur U2) sous lequel cet utilisateur destinataire (U2) est connu de l'utilisateur déposant (le pseudonyme, en général) ainsi qu'une identification de ligne téléphonique (idcom2, par exemple), mémorisée en association avec cet identifiant d'utilisateur de réseau social.

Les informations mémorisées en association avec le message déposé peuvent optionnellement contenir:
- pour l'utilisateur déposant, son identifiant unique d'utilisateur de réseau social (id1, par exemple pour l'utilisateur U1);
- pour chaque utilisateur destinataire, son identifiant unique d'utilisateur de réseau social (id2, par exemple pour l'utilisateur U2).

Enfin, une notification de dépôt du message est envoyée à destination d'au moins un terminal associé à la ligne téléphonique identifiée, la notification comprenant un identifiant d'utilisateur de réseau social affecté à l'utilisateur déposant : l'identifiant d'utilisateur de réseau social qui est envoyé dans la notification est celui sous lequel l'utilisateur déposant est connu des utilisateurs destinataires dans le réseau social (en général, c'est son pseudonyme).

Dans les modes de réalisation où c'est un serveur de messagerie qui réceptionne la demande de dépôt de message, ce serveur de messagerie SMGM, SMGF et SMGV procède lui-même au dépôt du message dans la boîte de messagerie identifiée par la ligne téléphonique associée et à l'enregistrement des données fournies en association avec le message à déposer.

Dans les modes de réalisation où c'est le serveur SRS de réseau social qui réceptionne la demande de dépôt de message, il transmet cette demande à la plateforme de messagerie PFS avec toutes les informations nécessaires à son traitement : les identifiants d'utilisateur de réseau social, et une identification des lignes téléphonique concernées. La plateforme de messagerie PFS traite alors la demande de dépôt de message, comme dans le cas, décrit ci-dessous, où c'est la plateforme de messagerie PFS qui réceptionne la demande de dépôt de message.

Dans les modes de réalisation où c'est la plateforme de messagerie PFS qui réceptionne la demande de dépôt de message, cette plateforme de messagerie PFS est conçue pour requérir le dépôt du message auprès d'un serveur de messagerie et pour communiquer avec les différents serveurs de messagerie réseau SMGM, SMGF et SMGV, afin de commander à distance des fonctions de ces serveurs de messagerie, notamment les fonctions de dépôt de message et d'enregistrement de données en association avec les messages déposés.

Les serveurs de messagerie réseau SMGM, SMGF et SMGV présentent chacun dans ce but une interface de commande, permettant de commander à distance certaines fonctions de ces serveurs de messagerie, notamment les fonctions de dépôt de message et d'enregistrement de données en association avec les messages déposés.

Cette interface de commande est par exemple une interface logicielle de programmation (API, Application Programming Interface), par exemple réalisée en tant que Web service.

Cette interface de commande peut aussi être mise en oeuvre par un module de couplage, intégrant un modem pour la réception des notifications d'appel téléphonique et l'établissement d'une liaison téléphonique.

De manière connue, pour les lignes téléphoniques en mode circuit, le numéro de téléphone de la ligne téléphonique de l'utilisateur destinataire est composé de manière à établir une liaison téléphonique avec le serveur de messagerie réseau de cette ligne téléphonique. Via cette liaison téléphonique, des commandes DTMF et/ou un flux téléphonique peuvent ensuite être transmis pour commander un enregistrement par le serveur de messagerie d'un message dans la boîte de messagerie de la ligne téléphonique spécifiée à partir du numéro de téléphone composé.

Dans d'autres services de messagerie réseau, une liaison téléphonique est établie avec le serveur de messagerie par composition d'un numéro de téléphone dédié au service de messagerie. Puis le numéro de téléphone de la ligne téléphonique de l'utilisateur destinataire est composé afin de sélectionner la boîte de messagerie destinataire du message. Enfin, a lieu l'enregistrement du message dans la boîte de messagerie de cet utilisateur destinataire par envoi des données du message via la liaison téléphonique ainsi établie.

Dans le cas d'une messagerie téléphonique réseau, le message est enregistré dans le serveur de messagerie réseau, dans la boîte de messagerie de la ligne téléphonique : le message enregistré peut ensuite être écouté en établissant une liaison téléphonique avec ce serveur de messagerie réseau et en écoutant le flux audio transmis à travers cette liaison téléphonique. Dans le cas d'un répondeur fixe, le message est enregistré dans le répondeur et la restitution du message peut être déclenchée par entrée de commande sur ce répondeur.

Dans d'autres services de messagerie réseau, par exemple le réseau VoIP RV, une liaison est établie avec le serveur de messagerie, puis une identification de la ligne téléphonique concernée par le dépôt de message à effectuer est transmise via la liaison ainsi établie.

Quelle que soit la technologie utilisée par les services de messagerie réseau, la plateforme de messagerie PFS est connectée à ces serveurs de messagerie SMGM, SMGF et SMGV et est conçue pour commander le dépôt d'un message auprès de l'un au moins de ces serveurs de messagerie par utilisation d'interfaces de commande de ces serveurs.

La plateforme de messagerie PFS est également conçue pour transmettre à ces serveurs de messagerie, soit dans le contenu même du message (sous forme vocale, textuelle et/ou visuelle), soit en tant que données à stocker en association avec le contenu du message, l'identifiant d'utilisateur de réseau social de l'utilisateur déposant du message et l'identifiant d'utilisateur de réseau social du ou des utilisateurs destinataires du message : ces identifiants d'utilisateur de réseau social seront utilisés notamment pour notifier le ou les utilisateurs destinataires du dépôt du message.

Ces informations comprennent notamment un identifiant d'utilisateur de réseau social de chacun de ces utilisateurs, par exemple le pseudonyme de chacun de ces utilisateurs. Ces informations seront ensuite utilisées pour la notification du dépôt du message dans une boîte de messagerie et/ou pour la restitution du message et/ou pour la réponse à un message déposé.

Lorsque les pseudonymes des utilisateurs déposant et destinataires d'un message déposé sont uniques et permettent d'identifier chacun un utilisateur de réseau social sans équivoque, il n'est pas nécessaire de mémoriser de surcroît, en association avec le message déposé, un identifiant unique pour chacun de ces utilisateurs. Dans le cas contraire, un identifiant unique d'utilisateur de réseau social sera stocké en plus du pseudonyme de chaque utilisateur afin de rendre possible l'accès ultérieur à des informations sur chacun de ces utilisateurs, par exemple par interrogation du serveur SRS de réseau social : notamment pour obtenir à partir de cet identifiant unique une identification de ligne téléphonique déclarée par un utilisateur de réseau social dans les données de son profil utilisateur, pour une ligne téléphonique à utiliser pour le dépôt de message.

Dans un mode de réalisation, quand le serveur de messagerie récepteur du message à stocker n'est pas conçu pour stocker des informations sur l'utilisateur déposant d'un message autres qu'un numéro de téléphone de l'utilisateur déposant, la plateforme de messagerie PFS vocalise le pseudonyme de l'utilisateur déposant (voire celui de l'utilisateur destinataire) et génère un contenu de message audio intégrant à la fois le message proprement dit et une introduction à ce message contenant l'identifiant d'utilisateur de réseau social sous forme vocalisée. Cette introduction est par exemple une phrase du type « message en provenance de X » et/ou « message à destination de Y », où X, Y sont respectivement les pseudonymes des utilisateurs déposant et destinataire. Le contenu de message audio ainsi constitué est destiné à être restitué dans son intégralité à chaque utilisateur destinataire.

La plateforme de messagerie PFS est également conçue pour transmettre à ces serveurs de messagerie, en tant que données à stocker en association avec le contenu du message, l'identification de ligne téléphonique associée à l'utilisateur déposant et une identification de ligne téléphonique associée à chaque utilisateur destinataire, et, optionnellement, l'identifiant unique d'utilisateur de réseau social de l'utilisateur déposant du message et l'identifiant unique d'utilisateur de réseau social du ou des utilisateurs destinataires du message.

En complément, de manière à permettre à la plateforme de messagerie PFS de traiter une demande de dépôt d'un message de réponse, en réponse à un message dont elle a traité la demande de dépôt, la plateforme de messagerie PFS mémorise pour chaque demande de dépôt de message (ou de message de réponse), les informations suivantes :
- l'identifiant d'utilisateur de réseau social de l'utilisateur déposant du message et l'identifiant d'utilisateur de réseau social du ou des utilisateurs destinataires du message,
- l'identification de ligne téléphonique associée à l'utilisateur déposant et une identification de ligne téléphonique associée à chaque utilisateur destinataire,
- et, optionnellement, l'identifiant unique d'utilisateur de réseau social de l'utilisateur déposant du message et l'identifiant unique d'utilisateur de réseau social du ou des utilisateurs destinataires du message.

### Notification du dépôt du message dans une boîte de messagerie - Etape 350

Les serveurs de messagerie réseau SMGM, SMGF et SMGV présentent chacun un module de notification pour notifier, chaque utilisateur destinataire, d'un message du dépôt de ce message dans la boîte de messagerie associée à une ligne téléphonique.

De manière connue, cette notification se traduit usuellement dans le cas d'un réseau mobile par le déclenchement d'un appel téléphonique sur la ligne téléphonique associée (appel d'un serveur vocal de messagerie, qui propose la consultation du ou des messages déposés) et/ou par un envoi de message, par exemple par un envoi de message court (SMS, Short Message Service), vers le terminal ou un des terminaux associé(s) à la ligne téléphonique. Dans le cas d'un répondeur fixe, la notification se traduit usuellement par un signal lumineux sur le répondeur pour signaler l'enregistrement d'un nouveau message dans ce répondeur.

Dans le procédé de dépôt de message selon l'invention, il est prévu en outre d'informer l'utilisateur destinataire d'un message sur l'identité de l'utilisateur déposant et/ou des éventuels autres utilisateurs destinataires du message déposé au moyen d'un identifiant d'utilisateur de réseau social associé à respectivement un de ces utilisateurs. L'identifiant d'utilisateur de réseau social peut être inclus sous forme vocale dans une notification vocale et/ou dans le contenu même du message si ce message est un message vocal. En alternative ou en complément, cet identifiant d'utilisateur de réseau social peut aussi être envoyé sous forme textuelle dans la notification de dépôt de message lorsque cette notification est une notification au format texte (SMS notamment).

D'autres méthodes de notification sont également applicables, par exemple des notifications applicatives, reçues et traitées par une application logicielle dédiée mise en oeuvre sur le terminal récepteur de la notification.

En complément, ou en alternative à une notification émise par le serveur de messagerie réseau SMGM, SMGF et SMGV, la plateforme de service PFS envoie une notification vers au moins un terminal associé à la ligne téléphonique de chaque utilisateur destinataire du message. Ce message est par exemple un message court (Short Message Service, SMS) avec une identification de cette plateforme de service PFS (par exemple, un numéro court spécifique identifiant l'entité émettrice du message et/ou un nom commercial du service de dépôt de message intégré dans le corps du message court) et/ou un contenu de message qui indique les identifiants des utilisateurs déposant et/ou destinataire. Le corps du message court contient par exemple la phrase suivante : « *Le service orange messaging vous signale le dépôt dans votre boîte de messagerie d'un message en provenance de « idps1 »; composez le 888 pour consulter ce message ».*

### Exemple de réalisation du procédé de dépôt de message

L'utilisateur déposant U1 formule une demande de dépôt d'un message M1 à destination des utilisateurs destinataires U2 et U4. Pour cela, l'utilisateur U1 se connecte sur une page Web spécifique du réseau social RS : l'utilisateur U1 utilise son terminal TA et établit au moyen de ce terminal TA une connexion avec le serveur SRS de réseau social.

Le terminal TA reçoit une page Web qu'il affiche sur un écran de ce terminal TA. Cette page comprend une liste d'utilisateurs du réseau social, de préférence des utilisateurs connus de l'utilisateur U1 et/ou en relation avec cet utilisateur U1 au travers du réseau social : ces utilisateurs sont identifiés dans cette liste par leur pseudonyme.

L'utilisateur U1 sélectionne les utilisateurs destinataires du message à déposer : en l'occurrence les utilisateurs U2 et U4, que U1 connaît sous leur pseudonyme idps2 et idps4.

Puis l'utilisateur U1 compose le message M1 à déposer. Ce message peut être un message texte, que l'utilisateur U1 saisit sur son terminal TA dans la page Web qui est affichée sur ce terminal. Ce message peut être aussi un fichier audio et/ou vidéo pré-enregistré sur ce terminal que l'utilisateur U1 sélectionne au moyen d'un élément d'interface (bouton, menu, etc) affiché dans la page Web qui est affichée sur ce terminal. En alternative, l'utilisateur enregistre un message texte, vocal et /ou vidéo sur son terminal TA.

Puis l'utilisateur U1 valide la demande de dépôt de message : l'utilisateur U1 clique par exemple sur un bouton ou lien hypertexte qui est présenté dans la page Web affichée sur le terminal TA pour déclencher l'envoi et le traitement de la demande de dépôt de message. Le serveur SRS de réseau social déclenche alors la transmission de la demande de dépôt de message à la plateforme de messagerie PFS.

Cette demande de dépôt de message contient un identifiant d'utilisateur de réseau social (en l'occurrence, *idps1)* de l'utilisateur déposant U1 et un identifiant d'utilisateur de réseau social pour chacun des utilisateurs destinataires U2 et U4 (en l'occurrence, *idps2 et idps4)*.

La demande de dépôt de message est accompagnée en outre du contenu du message à déposer ou est suivie d'une transmission de ce contenu. Ce contenu est sous forme textuelle, audio et/ou vidéo, ou une combinaison quelconque de ces formes, selon les possibilités du serveur de messagerie devant stocker le message M1.

La plateforme de messagerie PFS interroge le serveur SRS de réseau social pour obtenir, pour chaque utilisateur destinataire du message, une identification de ligne téléphonique associée à partir de l'identifiant d'utilisateur de réseau social contenu dans la demande de dépôt de message. Le serveur SRS de réseau social transmet alors à la plateforme de messagerie PFS les identifications de ligne téléphonique *idcom2* et *idcom4* mémorisées en association respectivement avec les identifiants d'utilisateur de réseau social *idps2 et idps4.* On suppose donc ici qu'une règle de sélection, définie par l'utilisateur U4, a conduit le serveur SRS de réseau social à sélectionner l'identifications de ligne téléphonique *idcom4* plutôt que idcom4bis.

En alternative, au lieu que ce soit la plateforme de messagerie PFS qui interroge le serveur SRS de réseau social, le serveur SRS de réseau social fournit ces identifications de lignes téléphoniques à la plateforme de messagerie PFS dès qu'il réceptionne la formulation de la demande de dépôt de message et les transmet à la plateforme de messagerie PFS.

La plateforme de messagerie PFS se connecte alors au serveur de messagerie de la ligne téléphonique *idcom2,* c'est-à-dire au serveur de messagerie SMGM.

Si le serveur de messagerie récepteur du message à déposer n'accepte que certaines formes de message, la plateforme de messagerie PFS effectue une conversion du contenu du message dans une forme acceptée par le serveur de messagerie récepteur. Par exemple, si ce serveur de messagerie n'accepte que les messages vocaux, les messages sous forme textuelle seront vocalisés et le contenu vidéo du message à déposer sera supprimé.

Au final, la plateforme de messagerie PFS commande le dépôt d'un message auprès du serveur de messagerie SMGM, dans la boîte de messagerie associée à la ligne téléphonique *idcom2.*

Le serveur de messagerie SMGM stocke le message M1, notamment le contenu de ce message, et mémorise en association les informations suivantes :
- pour l'utilisateur déposant U1, un identifiant d'utilisateur de réseau social (idps1) sous lequel l'utilisateur déposant U1 est connu des utilisateurs destinataires, une identification de ligne téléphonique (idcom1), mémorisée en association avec cet identifiant d'utilisateur de réseau social, et, optionnellement un identifiant unique d'utilisateur de réseau social (id1);
- pour chaque utilisateur destinataire U2, U4, un identifiant d'utilisateur de réseau social (idps2, idps4) sous lequel ces utilisateurs destinataires sont connu de l'utilisateur déposant, une identification de ligne téléphonique (idcom2, idcom4), mémorisée en association avec cet identifiant d'utilisateur de réseau social, et, optionnellement un identifiant unique d'utilisateur de réseau social (id2, id4).

Le serveur de messagerie SMGM envoie ensuite une notification de dépôt de message vers le téléphone T2 associé à la ligne idcom2: cette notification se traduit par un appel du serveur vocal de la messagerie du réseau mobile RM. Le message vocal transmis par le serveur vocal contient sous forme vocale l'identifiant d'utilisateur de réseau social de l'utilisateur déposant U1, voire également celui de l'autre utilisateur destinataire U4.

Dans une alternative, la plateforme de messagerie PFS envoie en complément de la notification émise par le serveur de messagerie, un message de notification sous forme par exemple de message court (Short Message Service, SMS) contenant sous forme textuelle l'identifiant d'utilisateur de réseau social de l'utilisateur déposant U1, voire également celui de l'autre utilisateur destinataire U4. Le corps du message court contient par exemple la phrase suivante : « *Le service orange messaging vous signale le dépôt dans votre boîte de messagerie d'un message en provenance de « idps1 »; composez le 888 pour consulter ce message ».*

Puis la plateforme de messagerie PFS se connecte au serveur de messagerie de la ligne téléphonique *idcom4,* c'est-à-dire au serveur de messagerie SMGM.

Si le serveur de messagerie récepteur du message à déposer n'accepte que certaines formes de message, la plateforme de messagerie PFS effectue une conversion du contenu du message dans une forme acceptée par le serveur de messagerie récepteur. Par exemple, si ce serveur de messagerie n'accepte que les messages vocaux, les messages sous forme textuelle seront vocalisés et le contenu vidéo du message à déposer sera supprimé.

Puis la plateforme de messagerie PFS commande le dépôt d'un message auprès du serveur de messagerie SMGM, dans la boîte de messagerie associée à la ligne téléphonique *idcom4.* Le serveur de messagerie SMGM envoie une notification de dépôt de message vers le téléphone T4 associé à la ligne idcom4: cette notification se traduit par un appel du serveur vocal de la messagerie du réseau mobile RM. Le message vocal transmis par le serveur vocal contient sous forme vocale l'identifiant d'utilisateur de réseau social de l'utilisateur déposant U1, voire également celui de l'autre utilisateur destinataire U2. L'utilisateur U4 est notifié de la même manière que l'utilisateur U2.

### Figure 4 - Consultation d'un message déposé

Différents modes de réalisation d'un procédé de demande de consultation de message, mis en oeuvre par un terminal d'un utilisateur, et d'un procédé de traitement d'une demande de consultation de message, mis en oeuvre par une ou plusieurs entités réseaux parmi le serveur SRS de réseau social, la plateforme de messagerie PFS et/ou les serveurs de messagerie SMGF, SMGM, SMGV, sont décrits par référence à la figure 2.

### Demande de consultation de message d'un utilisateur consultant - Etape 400

Un utilisateur destinataire d'un message peut, de manière connue, consulter et/ou écouter et/ou visualiser le contenu du message qui est déposé dans sa boîte de messagerie.

Une demande de consultation de message est formulée (étape 400) par l'utilisateur et réceptionnée (étape 400) par un serveur de messagerie réseau ou un répondeur fixe.

Lorsque le message est déposé auprès répondeur téléphonique stockant les messages d'une boîte de messagerie d'une ligne téléphonique, la consultation du message est effectuée par utilisation de ce répondeur, par exemple actionnement d'une touche dédiée, déclenchant la restitution de tous les messages stockés (ou seulement des messages non encore consultés) dans ce répondeur téléphonique.

Lorsque le message est déposé auprès d'un serveur de messagerie réseau, la consultation du message nécessite l'établissement d'une liaison de communication entre ce serveur de messagerie réseau et un terminal. Si le serveur de messagerie réseau concerne une messagerie vocale pour une ligne téléphonique, la liaison de communication sera une liaison téléphonique et un flux audio bidirectionnel sera transmis au travers de cette liaison de communication entre le serveur de messagerie et le terminal utilisé pour établir la liaison de communication. Si le serveur de messagerie réseau concerne une messagerie Web pour une ligne téléphonique VoIP, la liaison de communication pourra être une liaison IP et un flux audio sera transmis au travers de cette liaison de communication vers le terminal utilisé pour établir la liaison de communication.

Dans le cadre de l'invention, les messages étant mémorisés en association avec un identifiant d'utilisateur de réseau social pour l'utilisateur déposant du message et pour le ou les utilisateurs destinataires du message, de nouvelles possibilités de consultation de message sont offertes aux utilisateurs. Ces nouvelles possibilités concernent notamment la possibilité de sélectionner des messages à consulter et/ou de définir l'ordre dans lequel les messages sélectionnés seront restitués. Les identifiants d'utilisateur de réseau social des utilisateurs déposant ou destinataire mémorisés avec un message peuvent notamment servir de critère de sélection ou de tri de messages facilitant la consultation des messages.

Par exemple, l'utilisateur dispose de moyens d'interaction (touches de téléphone déclenchant un envoi de signaux DTMF vers un serveur vocal de messagerie, ou bien éléments d'interface utilisateur dans une page Web pour un serveur Web déclenchant l'envoi d'une requête Web, ou bien encore bouton sur un répondeur téléphonique, etc), avec le serveur de messagerie pour formuler et préciser sa demande de consultation de message en sélectionnant le ou les messages qu'il souhaite consulter.

Dans ce but, l'utilisateur peut avoir à fournir, avec sa demande de consultation, un identifiant d'utilisateur de réseau social servant à identifier le ou les messages faisant l'objet de la demande de consultation et/ou l'ordre dans lequel ces messages doivent être présentés à l'utilisateur consultant.

Selon un premier exemple, la demande de consultation de message concerne au moins un message déposé par un utilisateur de réseau social dont un identifiant d'utilisateur de réseau social est spécifié par l'utilisateur de réseau social dont provient la demande de consultation de message.

Selon un deuxième exemple, la demande de consultation de message concerne une pluralité de messages à restituer successivement selon un ordre spécifié par l'utilisateur de réseau social dont provient la demande de consultation de message. L'ordre spécifié peut indiquer par exemple que les messages seront triés sur la base de l'identifiant d'utilisateur de réseau social de l'utilisateur déposant, par ordre alphabétique d'identifiant.

Selon un troisième exemple, la demande de consultation de message concerne au moins un message à destination d'un utilisateur de réseau social dont un identifiant d'utilisateur de réseau social est spécifié par l'utilisateur de réseau social dont provient la demande de consultation de message.

Toutes les combinaisons de ces différents exemples sont envisageables.

En conséquence, suite à l'établissement de la liaison de communication avec le serveur de messagerie, ce serveur de messagerie reçoit une demande de consultation de message provenant d'un terminal d'un utilisateur consultant et identifie sur la base de cette demande au moins un message déposé par ou à destination de cet utilisateur consultant, au moyen d'un procédé de dépôt de message et/ou au moyen d'un procédé de réponse à un message tel que décrit dans ce document. Le serveur de messagerie procède ensuite à la restitution d'au moins une partie du contenu d'au moins un message identifié.

Lorsque la demande de consultation concerne une pluralité de messages, et qu'un ordre de restitution a été spécifié par l'utilisateur, le serveur de messagerie procède à la restitution de ces messages dans l'ordre spécifié.

Pour cela, le serveur de messagerie émet vers le terminal de l'utilisateur consultant, au travers de la liaison de communication établie, un flux de donnée contenant au moins une partie du contenu d'au moins un des messages de ladite pluralité de messages conformément à l'ordre spécifié. Le terminal réceptionne le flux de données et procède à la restitution locale du son, de la vidéo et/ou du texte contenu dans ce flux de données.

### Restitution des identifiants d'utilisateur de réseau social - Etape 410

En outre, lors de la consultation d'un message déposé auprès d'un serveur de messagerie réseau SMGM, SMGF et SMGV, il est prévu en outre d'informer l'utilisateur destinataire d'un message sur l'identité de l'utilisateur déposant et/ou des éventuels autres utilisateurs destinataires de ce message au moyen du ou des identifiants d'utilisateur de réseau social mémorisés en association avec le ou les messages faisant l'objet de la demande consultation.

Cet identifiant d'utilisateur de réseau social pourra être un pseudonyme de cet utilisateur déposant et/ou destinataire afin de ne pas divulguer l'identité réelle de cet utilisateur déposant et/ou destinataire.

Dans ce but, le serveur de messagerie transmet vers le terminal de l'utilisateur consultant, au travers de la liaison de communication établie, l'identifiant d'utilisateur de réseau social de l'utilisateur déposant et/ou du ou des utilisateurs destinataires de chaque message. Le terminal réceptionne le flux de données et procède à la restitution locale, de ce ou ces identifiants d'utilisateur de réseau social. Si un identifiant d'utilisateur de réseau social est transmis vers le terminal de l'utilisateur consultant sous forme textuelle, cet identifiant peut être simplement affiché sur le terminal de l'utilisateur consultant ou être vocalisé. Si un identifiant d'utilisateur de réseau social est transmis vers le terminal de l'utilisateur consultant sous forme vocale et/ou visuelle, ce terminal peut simplement restituer le contenu audio et ou vidéo qu'il reçoit afin de restituer ce ou ces identifiants d'utilisateur de réseau social pour l'utilisateur consultant.

Dans un mode de réalisation, de manière à ce que la solution de dépôt de message soit compatible avec les systèmes de messagerie existant, chaque identifiant d'utilisateur de réseau social pourra être inclus sous forme vocale dans le contenu vocal du message enregistré puis être restitué avec le contenu de ce message, par exemple avant le contenu proprement dit de ce message.

Le fait d'informer l'utilisateur destinataire d'un message sur l'identité, dans le réseau social, de l'utilisateur déposant et/ou destinataire permet une mise en relation par message entre ces utilisateurs par le biais d'une boîte de messagerie, sans que ces utilisateurs aient eu besoin préalablement d'échanger leurs coordonnées téléphoniques et sans que des autorisations préalables ne soient nécessaires de la part de ces utilisateurs pour effectuer le partage de ces coordonnées téléphoniques.

Les identifications de ligne téléphonique qui sont stockées avec un message ne sont par contre jamais transmises à un utilisateur destinataire ou déposant d'un message lors de la consultation du message et destinée uniquement au traitement d'une éventuelle demande de dépôt de message de réponse.

Au final, tout ou partie du message consulté est transmis au terminal de l'utilisateur consultant pour être restitué par ce terminal (étape 420).

### Figure 5 - Dépôt d'un message de réponse à un message antérieur

Différents modes de réalisation d'un procédé de demande de dépôt de message de réponse, mis en oeuvre par un terminal d'un utilisateur, et d'un procédé de traitement d'une demande de dépôt de message de réponse, mis en oeuvre par une ou plusieurs entités réseaux parmi le serveur SRS de réseau social, la plateforme de messagerie PFS et/ou les serveurs de messagerie SMGF, SMGM, SMGV, sont décrits par référence à la figure 2.

Chaque utilisateur destinataire U2, U4 d'un message M1 déposé par un utilisateur U1, dit message initial, peut décider de répondre à ce message M1 après avoir consulté ce message, ou même avant d'avoir consulté ce message. En conséquence, les étapes du procédé de demande de dépôt de réponse à un message et celles du procédé de traitement d'une demande de dépôt de réponse à un message sont mises en oeuvres avant ou après consultation d'un message.

En outre, le procédé de consultation de message décrit ci-dessus est applicable également aux messages de réponse à un message : chaque message de réponse peut être consulté selon le procédé de consultation de message décrit au regard de la figure 4.

### Demande de dépôt d'un message de réponse à un message antérieur - Etape 500 et 510

Pour formuler une demande de dépôt d'un message de réponse à un message antérieur (que ce message antérieur soit un message initial, c'est-à-dire un premier message d'une série de messages qui n'est la réponse d'aucun message, ou un message de réponse à un message), l'utilisateur destinataire U2 ou U4 se connecte au moyen d'un terminal soit au serveur de messagerie auprès duquel le message antérieur a été déposé, soit directement à la plateforme de messagerie PFS.

Cet utilisateur formule (étape 500 et 510) alors au moyen de son terminal une demande de dépôt de message de réponse, de manière identique à ce qui a été décrit ci-dessus au regard de la figure 3 pour une demande de dépôt d'un message initial. Les étapes 500 et 510 incluent donc respectivement les caractéristiques des étapes 300 et 310 décrites plus haut. Au final, une demande de dépôt de message de réponse est envoyée à l'étape 510 depuis un terminal de l'utilisateur vers une entité réseau (plateforme de messagerie PFS ou un des serveurs de messagerie SMGF, SMGM, SMGV) pour traitement. Des informations sur la demande de dépôt de message de réponse sont également transmises, après, avant ou avec la demande de dépôt de message de réponse ou encore en tant que données constitutives de la demande de dépôt de message de réponse. Ces informations servent à identifier le ou les utilisateurs destinataires du message de réponse à déposer parmi le ou les utilisateurs destinataires du message antérieure et l'utilisateur déposant du message antérieur.

A la différence d'un dépôt de message initial où l'utilisateur peut choisir tout destinataire (voir étape 310), l'utilisateur demandant à déposer un message de réponse sélectionne (étape 510) parmi les utilisateurs déposant et destinataires du message antérieur, ceux qui seront destinataires du message de réponse, par exemple à partir d'une liste d'utilisateurs qui lui est fournie dans une page Web ou une interface utilisateur d'une application ou à partir d'un menu qui lui est présenté par le serveur vocal qui reçoit cette demande.

En outre, quand plusieurs messages ont été stockés dans une boîte de messagerie de l'utilisateur consultant, l'utilisateur consultant devra sélectionner le message auquel il souhaite répondre. Par défaut, c'est le dernier message consulté ou le message en cours de consultation qui sera sélectionné en tant que message antérieur pour lequel un message de réponse est à déposer.

L'entité réseau (soit la plateforme de messagerie PFS, soit un serveur de messagerie SMGF, SMGM ou SMGV) qui reçoit et traite la demande de dépôt de message de réponse est en charge d'obtenir les données du contenu du message à déposer ainsi que les informations à enregistrer en association avec ce message à déposer. Les informations à enregistrer comprennent un identifiant d'utilisateur de réseau social de l'utilisateur déposant du message de réponse à déposer, et d'autre part, un identifiant d'utilisateur de réseau social du ou des utilisateurs destinataires du message de réponse à déposer. Ces informations sont fournies sous forme textuelle ou vocale à la plateforme de messagerie PFS.

Lorsque le message à déposer est une réponse à un message antérieur, les informations à enregistrer en association avec ce message à déposer peuvent être déduites des informations enregistrées avec le message antérieur. Par exemple, si l'utilisateur U2 demande à déposer un message de réponse à un message M1 antérieur déposé par l'utilisateur U1 à destination de l'utilisateur U2 et U4, les identifiants d'utilisateur de l'utilisateur déposant de ce message de réponse est l'identifiant de l'utilisateur U2 enregistré en association avec le message M1 et les identifiants des utilisateurs destinataires sont les identifiants des utilisateurs U1 et U4 enregistrés en association avec le message M1.

De même que dans le cas du dépôt d'un message initial, décrit au regard de la figure 3, l'entité réseau qui reçoit et traite la demande de dépôt de message en réponse à un message initial, procède à l'identification d'une ligne téléphonique associée à un identifiant d'utilisateur de réseau social affecté à l'utilisateur déposant du message initial.

En particulier, la ligne téléphonique identifiée est une ligne téléphonique dont une identification a été mémorisée dans des données de profil d'utilisateur de réseau social en association avec un identifiant d'utilisateur de réseau social affecté à l'utilisateur destinataire concerné.

Lorsque plusieurs lignes téléphoniques sont mémorisées en association avec un identifiant d'utilisateur de réseau social affecté à un utilisateur destinataire, la ligne téléphonique identifiée est sélectionnée parmi ces différentes lignes téléphoniques en fonction d'une règle de sélection. Cette règle de sélection utilise par exemple un critère relatif au lien dans le réseau social entre l'utilisateur déposant du message de réponse et l'utilisateur destinataire concerné. Selon un autre exemple, cette règle de sélection utilise un critère relatif à l'utilisateur déposant du message.

### Dépôt du message de réponse - Etapes 520 à 540

Puis a lieu le dépôt du message dans une boîte de messagerie associée à la ligne téléphonique ainsi identifiée. Le dépôt d'un message de réponse est mis en oeuvre de la même manière que le dépôt d'un message initial, tel que décrit au regard de la figure 3, aux étapes 320 à 340.

Dans les modes de réalisation où un serveur de messagerie qui réceptionne la demande de dépôt du message de réponse, ce serveur de messagerie SMGM, SMGF et SMGV procède lui-même au dépôt du message dans la boîte de messagerie identifiée par la ligne téléphonique associée et à l'enregistrement des données fournies en association avec le message à déposer.

Dans les modes de réalisation où c'est la plateforme de messagerie PFS qui réceptionne la demande de dépôt du message de réponse, cette plateforme de messagerie PFS est conçue pour requérir le dépôt du message auprès d'un serveur de messagerie et pour communiquer avec les différents serveurs de messagerie réseau SMGM, SMGF et SMGV, afin de commander à distance, comme déjà décrit pour le cas du dépôt d'un message initial, des fonctions de ces serveurs de messagerie, notamment les fonctions de dépôt de message et d'enregistrement de données en association avec les messages déposés.

Dans tous ces modes de réalisation, est mémorisé, en association avec le message déposé, un identifiant d'utilisateur de réseau social de l'utilisateur déposant et / ou du ou des utilisateurs destinataires.

Il est à noter que si le message antérieur était destiné à plusieurs utilisateurs destinataires, le message de réponse à ce message antérieur peut n'être destiné qu'à l'utilisateur déposant du message antérieur et non pas aux autres utilisateurs destinataires, ou seulement à une partie des utilisateurs destinataires. Dans ce cas, l'utilisateur demandant le dépôt d'un message de réponse fournit une identification du ou des utilisateurs destinataires de son message de répondre. Par défaut, tous les autres utilisateurs destinataires du message antérieur seront destinataires également du message de réponse, ainsi que l'utilisateur déposant du message antérieur.

En outre, du fait qu'il s'agit d'un dépôt d'un message de réponse à un message antérieur existant, une estampille est mémorisée par la plateforme de messagerie PFS et/ou par le serveur de messagerie en association avec le message de réponse pour signifier que ce message de réponse est un message de réponse à un message antérieur et/ou pour identifier le message antérieur. Un identifiant de message est par exemple mémorisé avec chaque message déposé, représentatif d'un éventuel message antérieur dont le message déposé est une réponse, cet identifiant prenant une valeur spécifique quand le message déposé n'est pas un message de réponse.

Ainsi, quand une demande de consultation du message de réponse est reçue, il est possible de d'identifier le message antérieur dont ce message de réponse est une réponse et de proposer à l'utilisateur consultant du message de réponse de consulter également le message antérieur, et ce même si la boîte de messagerie stockant le message antérieur et le message de réponse n'est pas la même.

Une estampille peut également être mémorisée par la plateforme de messagerie PFS et/ou par le serveur de messagerie en association avec le message antérieur pour signifier qu'un message de réponse a été déposé pour ce message antérieur et/ou pour identifier au moins un message de réponse déposé ultérieurement. Ainsi, quand une demande de consultation du message antérieur est reçue, il est possible de déterminer si un message de réponse a été déposé et, dans l'affirmative, de proposer à l'utilisateur consultant du message antérieur de consulter également le message de réponse.

### Notification du dépôt du message de réponse - Etape 550

Après enregistrement du message de réponse et des informations associées, le ou les utilisateurs destinataires du message de réponse sont notifiés du dépôt de ce message de réponse. La méthode décrite ci-dessus pour l'étape 350 de notification de dépôt d'un message initial s'applique de manière identique au cas de la notification du dépôt d'un message de réponse.

Dans le procédé de dépôt de message de réponse selon l'invention, il est prévu notamment d'informer l'utilisateur destinataire d'un message sur l'identité de l'utilisateur déposant et/ou des éventuels autres utilisateurs destinataires du message de réponse déposé au moyen d'un identifiant d'utilisateur de réseau social associé à respectivement un de ces utilisateurs.

L'identifiant d'utilisateur de réseau social peut être inclus sous forme vocale dans une notification vocale et/ou dans le contenu même du message si ce message est un message vocal. En alternative ou en complément, cet identifiant d'utilisateur de réseau social peut aussi être envoyé sous forme textuelle dans la notification de dépôt de message lorsque cette notification est une notification au format texte (SMS notamment). D'autres méthodes de notification sont également applicables.

Lorsque l'utilisateur déposant d'un message de réponse est identifié à partir d'un identifiant anonymisé d'utilisateur de réseau social, son identité réelle n'est pas communiquée aux utilisateurs destinataires de ce message.

En complément, la notification de dépôt de message de réponse peut contenir une information sur le fait que le message déposé est un message de réponse et/ou une ou plusieurs informations sur le message antérieur (date et heure du message, utilisateur déposant et/ou utilisateurs destinataires) dont ce message de réponse est une réponse.

### Cas de réponses successives à un message initial

Le procédé de dépôt de message qui vient d'être décrit peut être utilisé plusieurs fois, de manière récursive pour déposer un message de réponse à un message de réponse. Pour des questions de limitations des ressources de stockage de messages, le nombre de niveaux de messages de réponses à un message initial donné peut être limité.

A chaque demande de dépôt de message de réponse, l'entité réseau qui réceptionne la demande identifie une ligne téléphonique associée à un identifiant d'utilisateur de réseau social affecté à chaque utilisateur de réseau social destinataire du message de réponse, puis requiert le dépôt du message de réponse, dans une boîte de messagerie associée à la ligne téléphonique identifiée et un envoi d'une notification de dépôt du message à destination d'au moins un terminal associé à la ligne téléphonique identifiée.

Lorsqu'un utilisateur demande à déposer un message de réponse à un message antérieur, il peut préciser quel est le message antérieur pour lequel il veut procéder au dépôt de message de réponse. En particulier, si plusieurs messages de réponse ont successivement été déposés pour un même message initial, que ce soit en réponse directe à ce message initial ou en réponse à un message de réponse de ce message initial, l'utilisateur peut sélectionner un message parmi ceux stockés dont il est soit l'utilisateur déposant, soit l'utilisateur destinataire.

Pour cela une interface graphique peut être proposée pour lui permettre une visualisation intuitive de la succession des messages de réponse. Ou encore, il peut être prévu un serveur vocal qui présente à l'utilisateur les différentes options et demande à l'utilisateur d'en sélectionner une par appui sur une touche du terminal utilisé pour la demande de dépôt de message de réponse.

Dans un mode de réalisation, la notification de dépôt d'un message de réponse informe chaque utilisateur destinataire de ce message de réponse sur les différentes possibilités de consultation de messages qui lui sont proposées :
- soit de consulter un seul message particulier, choisi par l'utilisateur destinataire, parmi ces différents messages présents dans sa boîte de messagerie ;
- soit de consulter un message particulier parmi ces différents messages, puis de consulter le ou les messages de réponse à ce message ;
- soit de consulter un seul message particulier parmi ces différents messages, puis de consulter les messages de réponse à ce message et ce de manière itérative jusqu'au dernier niveau de réponse
- soit de consulter un seul message particulier parmi ces différents messages, puis de consulter tous les messages déposés après ce message particulier ;
- soit de consulter tous les messages provenant d'un utilisateur particulier et/ou dont un auyre utilisateur est destinataire,
- soit de naviguer dans les différents messages pour écouter les messages dans l'ordre qui lui convient.

### Exemple de réalisation du procédé de consultation de message et du procédé de dépôt de message de réponse

On suppose à titre d'exemple qu'un message M1 a été déposé par l'utilisateur U1 dans plusieurs boîtes de messagerie de plusieurs utilisateurs destinataires U2, U4. Le message M1 est stocké en association avec :
- les identifiants id1, idps1, idcom1 pour l'utilisateur U1, utilisateur déposant,
- les identifiants id2, idps2, idcom2 pour l'utilisateur U2, utilisateur destinataire,
- les identifiants id4, idps4, idcom4 pour l'utilisateur U4, utilisateur destinataire.

En cas de réponse de l'utilisateur U2 à un message M1 déposé par l'utilisateur U1, la réponse est mémorisée en tant que message M2(M1) dans la boîte de messagerie de l'utilisateur U1 selon une des méthodes de dépôt de message décrites ci-dessus. Le message M2(M1) est consultable par l'utilisateur U1 à partir de sa boîte de messagerie. Optionnellement, le message M2(M1) déposé par l'utilisateur U2 est également consultable par l'utilisateur U2 à partir de sa propre boîte de messagerie, c'est-à-dire la boîte de messagerie dans laquelle le message M1 a été déposé.

Le message M2 est stocké en association avec :
- les identifiants id1, idps1, idcom1 pour l'utilisateur U1, utilisateur destinataire,
- les identifiants id2, idps2, idcom2 pour l'utilisateur U2, utilisateur déposant,
- les identifiants id4, idps4, idcom4 pour l'utilisateur U4, utilisateur destinataire.

De même, en cas de réponse de l'utilisateur U4 à un message M1 déposé par l'utilisateur U1, la réponse est mémorisée en tant que message M4(M1) dans la boîte de messagerie de l'utilisateur U1 selon une des méthodes de dépôt de message décrites ci-dessus. Le message M4(M1) est consultable par l'utilisateur U1 à partir de sa boîte de messagerie. Optionnellement, le message M4(M1) est consultable par l'utilisateur U4 à partir de sa propre boîte de messagerie.

Le message M4 est stocké en association avec :
- les identifiants id1, idps1, idcom1 pour l'utilisateur U1, utilisateur destinataire,
- les identifiants id2, idps2, idcom2 pour l'utilisateur U2, utilisateur destinataire,
- les identifiants id4, idps4, idcom4 pour l'utilisateur U4, utilisateur déposant.

Dans un mode de réalisation, lorsque le message M1 initial a plusieurs utilisateurs destinataires U2 et U4, le message de réponse M2(M1) est consultable par tous les utilisateurs destinataires U2, U4 du message initial M1, chacun des utilisateurs destinataires pouvant consulter le message M2(M1) à partir de sa propre boîte de messagerie. Par exemple l'utilisateur U4 est utilisateur destinataire du message de réponse M2(M1), de même que l'utilisateur U1.

En alternative, l'utilisateur U2 peut préciser lors de la demande de dépôt du message de réponse M2(M1) que seuls certains utilisateurs destinataires du message initial M1 recevront dans leur boîte de messagerie le message de réponse M2(M1).

## Revendications

1. Procédé de traitement d'une demande de dépôt de message provenant d'un utilisateur (U1) d'un réseau social, *dit utilisateur déposant,* comprenant les étapes suivantes effectuées par au moins une entité réseau :
- une étape de réception (330 ; 530), par au moins une entité réseau, d'une demande de dépôt d'un message destiné à au moins un utilisateur (U2, U4) du réseau social, dit utilisateur destinataire, et d'informations associées à ladite demande de dépôt de message comprenant le message et un identifiant d'utilisateur du réseau social (idps2, idps4) pour chaque utilisateur destinataire,
- une étape d'identification (330 ; 530), dans ladite au moins une entité réseau, d'au moins une ligne téléphonique (idcom2, idcom4) d'un réseau téléphonique associée, dans le réseau social, à l'identifiant d'utilisateur du réseau social d'un utilisateur destinataire, en réponse à la réception de la demande de dépôt du message,
- une étape de dépôt (340 ; 540), à partir de ladite au moins une entité réseau, dudit message dans une boîte de messagerie du réseau téléphonique associée à la ligne téléphonique identifiée, la boîte de messagerie du réseau téléphonique étant gérée par un serveur de messagerie du réseau téléphonique dans lequel au moins un terminal associé avec la ligne téléphonique identifiée établit des communications téléphonique en utilisant la ligne téléphonique identifiée et
- une étape d'envoi, à partir de ladite au moins une entité réseau, dans le réseau téléphonique, d'une notification (350 ; 550) à destination du au moins un terminal (T2, T4) associé à la ligne téléphonique identifiée, la notification indiquant que le message est disponible dans la boite de messagerie du réseau téléphonique associée avec la ligne téléphonique identifiée et comprenant un identifiant d'utilisateur du réseau social affecté à l'utilisateur déposant.

2. Procédé de traitement selon la revendication 1, dans lequel l'identifiant d'utilisateur du réseau social de l'utilisateur déposant est un identifiant sous lequel l'utilisateur déposant est connu de l'utilisateur destinataire dans le réseau social et/ou l'identifiant d'utilisateur du réseau social de l'utilisateur destinataire est un identifiant sous lequel l'utilisateur destinataire est connu de l'utilisateur déposant dans le réseau social.

3. Procédé de traitement selon la revendication 1 ou 2, dans lequel l'identifiant d'utilisateur du réseau social de l'utilisateur déposant est un identifiant ne divulguant pas l'identité réelle de l'utilisateur déposant et/ou l'identifiant d'utilisateur du réseau social de l'utilisateur destinataire est un identifiant ne divulguant pas l'identité réelle de l'utilisateur destinataire.

4. Procédé de traitement selon l'une quelconque des revendications précédentes, dans lequel l'identification de la ligne téléphonique est mémorisée dans des données de profil d'utilisateur du réseau social de cet utilisateur destinataire qui ne sont pas accessibles à l'utilisateur déposant au travers du réseau social.

5. Procédé de traitement d'une demande de dépôt de message selon la revendication 1, comprenant une étape de mémorisation, en association avec le message déposé, d'un identifiant d'utilisateur du réseau social de l'utilisateur déposant et du ou des utilisateurs destinataires.

6. Procédé de traitement d'une demande de dépôt de message selon la revendication 1, comprenant une étape de mémorisation, en association avec le message déposé, d'une identification de ligne téléphonique pour l'utilisateur déposant et le ou les utilisateurs destinataires.

7. Procédé de traitement d'une demande de dépôt de message selon la revendication 1, dans lequel la demande de dépôt de message est réceptionnée par un service de demande de dépôt de message qui est intégré dans un service du réseau social auquel appartiennent l'utilisateur déposant et l'utilisateur destinataire.

8. Procédé de traitement d'une demande de dépôt de message selon la revendication 1, dans lequel la demande de dépôt de message est réceptionnée par un service de demande de dépôt de message qui est intégré dans un service de dépôt de message du réseau téléphonique.

9. Procédé de traitement d'une demande de dépôt de message selon la revendication 1, comprenant une étape de présentation à l'utilisateur déposant d'une liste d'utilisateurs du réseau social parmi laquelle au moins un utilisateur destinataire est à sélectionner, ladite liste étant constituée à partir d'une liste d'utilisateurs reliés avec l'utilisateur déposant dans un réseau social.

10. Procédé de traitement d'une demande de dépôt de message selon la revendication 1, dans lequel la ligne téléphonique identifiée est une ligne téléphonique d'un dit utilisateur destinataire, dont une identification a été mémorisée en association avec un identifiant d'utilisateur du réseau social affecté à cet utilisateur destinataire.

11. Procédé de traitement d'une demande de dépôt de message selon la revendication 1, dans lequel la ligne téléphonique identifiée est une ligne téléphonique sélectionnée parmi plusieurs lignes téléphoniques d'un *dit utilisateur destinataire* en fonction d'un critère relatif au lien dans le réseau social entre l'utilisateur déposant et l'utilisateur destinataire concerné.

12. Procédé de traitement d'une demande de dépôt de message selon la revendication 1, dans lequel la ligne téléphonique identifiée est une ligne téléphonique sélectionnée parmi plusieurs lignes téléphoniques d'un *dit utilisateur destinataire* en fonction d'un critère relatif à l'utilisateur déposant du message et/ou à l'utilisateur destinataire concerné.

13. Procédé de traitement d'une demande de dépôt d'un message de réponse, le procédé comprenant les étapes suivantes effectuées par au moins une entité réseau :
- une étape de réception (530), par au moins une entité réseau,
• d'une demande de dépôt d'un deuxième message, en réponse à un premier message, en provenance d'un utilisateur d'un réseau social, *dit utilisateur déposant,* à destination d'un utilisateur du réseau social, dit utilisateur destinataire, déposé dans une boîte de messagerie d'une ligne téléphonique au moyen d'un procédé de traitement d'une demande de dépôt de message selon l'une quelconque des revendications 1 à 12, le deuxième message étant destiné à l'utilisateur déposant du premier message, et
• d'informations associées à ladite demande de dépôt du deuxième message comprenant le deuxième message et un identifiant d'utilisateur du réseau social de l'utilisateur déposant, destinataire du deuxième message,
- une étape d'identification (530), dans ladite au moins une entité réseau, d'au moins une deuxième ligne téléphonique d'un réseau téléphonique associée, dans le réseau social, à l'identifiant d'utilisateur du réseau social affecté à l'utilisateur déposant du premier message, destinataire du deuxième message, en réponse à la réception de la demande de dépôt du deuxième message,
- une étape pour déclencher, pour au moins une dite deuxième ligne téléphonique identifiée, un dépôt (540), à partir de ladite au moins une entité réseau, dudit deuxième message dans une boîte de messagerie du réseau téléphonique associée à la deuxième ligne téléphonique identifiée, la boîte de messagerie du réseau téléphonique étant gérée par un serveur de messagerie du réseau téléphonique dans lequel au moins un terminal associé avec la deuxième ligne téléphonique identifiée établit des communications téléphonique en utilisant la deuxième ligne téléphonique identifiée et
- un envoi (550), à partir de ladite au moins une entité réseau, dans le réseau téléphonique, d'une notification à destination du au moins un terminal associé à la deuxième ligne téléphonique identifiée, la notification indiquant que le deuxième message est disponible dans la boite de messagerie du réseau téléphonique associée avec la deuxième ligne téléphonique identifiée et comprenant un identifiant d'utilisateur du réseau social affecté à l'utilisateur ayant demandé le dépôt du deuxième message.

14. Procédé de traitement d'une demande de dépôt de message de réponse selon la revendication 13, comprenant
- une étape de réception (530) d'une demande de dépôt d'un troisième message, en réponse au deuxième message,
- une étape d'identification (530) d'au moins une troisième ligne téléphonique associée à l'identifiant d'utilisateur du réseau social affecté à l'utilisateur déposant du deuxième message,
- une étape pour déclencher, pour au moins une dite troisième ligne téléphonique identifiée, un dépôt (540) dudit troisième message dans une boîte de messagerie associée à la troisième ligne téléphonique identifiée et un envoi (550) d'une notification de dépôt dudit troisième message à destination d'au moins un terminal associé à la troisième ligne téléphonique identifiée, la notification comprenant un identifiant d'utilisateur du réseau social affecté à l'utilisateur ayant demandé le dépôt du troisième message.

15. Procédé de demande de dépôt de message, provenant d'un utilisateur d'un réseau social, *dit utilisateur déposant,* le procédé comprenant:
une étape d'envoi (310), à au moins une entité réseau, d'une demande de dépôt d'un message, destiné à au moins un utilisateur du réseau social, *dit utilisateur destinataire,* et d'informations associées à ladite demande de dépôt de message comprenant le message et un identifiant d'utilisateur du réseau social pour chaque utilisateur destinataire, l'envoi (310) de ladite demande déclenchant :
- un dépôt (340), à partir de ladite au moins une entité réseau, dudit message dans une boîte de messagerie d'un réseau téléphonique associée à une ligne téléphonique du réseau téléphonique identifiée en réponse à l'envoi de la demande de dépôt du message, l'identifiant de la ligne téléphonique étant mémorisé, dans le réseau social, en association avec l'identifiant d'utilisateur du réseau social d'un utilisateur destinataire, la boîte de messagerie du réseau téléphonique étant gérée par un serveur de messagerie du réseau téléphonique dans lequel au moins un terminal associé avec la ligne téléphonique identifiée établit des communications téléphonique en utilisant la ligne téléphonique identifiée et
- un envoi (350), à partir de ladite au moins une entité réseau, dans le réseau téléphonique, d'une notification à destination du au moins un terminal associé à la ligne téléphonique, la notification indiquant que le message est disponible dans la boite de messagerie du réseau téléphonique associée avec la ligne téléphonique identifiée et comprenant un identifiant d'utilisateur du réseau social affecté à l'utilisateur déposant.

16. Procédé de demande de dépôt d'un message de réponse, le procédé comprenant,
- une étape d'envoi (510), à au moins une entité réseau,
▪ d'une demande de dépôt d'un deuxième message, en réponse à un premier message, en provenance d'un utilisateur du réseau social, *dit utilisateur déposant,* à destination d'un utilisateur du réseau social, dit utilisateur destinataire, déposé dans une boîte de messagerie d'une ligne téléphonique au moyen d'un procédé de demande de dépôt de message selon la revendication 15, le deuxième message étant destiné à l'utilisateur déposant du premier message, et
▪ d'informations associées à ladite demande de dépôt du deuxième message comprenant le deuxième message et un identifiant d'utilisateur du réseau social de l'utilisateur déposant, destinataire du deuxième message,
ladite demande de dépôt déclenchant, pour une deuxième ligne téléphonique associée à l'identifiant d'utilisateur du réseau social affecté à l'utilisateur déposant du premier message :
• un dépôt (540), à partir de ladite au moins une entité réseau, du deuxième message dans une boîte de messagerie d'un réseau téléphonique associée à la deuxième ligne téléphonique du réseau téléphonique identifiée en réponse à l'envoi de la demande de dépôt du deuxième message, l'identifiant de la ligne téléphonique étant mémorisé, dans le réseau social, en association avec l'identifiant d'utilisateur du réseau social de l'utilisateur déposant, la boîte de messagerie du réseau téléphonique étant gérée par un serveur de messagerie du réseau téléphonique dans lequel au moins un terminal associé avec la deuxième ligne téléphonique identifiée établit des communications téléphonique en utilisant la deuxième ligne téléphonique identifiée et
• un envoi (550), à partir de ladite au moins une entité réseau, dans le réseau téléphonique, d'une notification à destination du au moins un terminal associé à la deuxième ligne téléphonique,
la notification indiquant que le deuxième message est disponible dans la boite de messagerie du réseau téléphonique associée avec la deuxième ligne téléphonique identifiée et comprenant un identifiant d'utilisateur du réseau social affecté à l'utilisateur ayant demandé le dépôt du deuxième message.

17. Support d'enregistrement lisible par un processeur de données sur lequel est enregistré un programme comprenant des instructions de code de programme pour l'exécution des étapes d'un procédé selon l'une quelconque des revendications 1 à 16.

18. Entité réseau comprenant
- un module de réception (330 ; 530) d'une demande de dépôt d'un premier message, provenant d'un utilisateur (U1) d'un réseau social, *dit utilisateur déposant,* destiné à au moins un utilisateur (U2, U4) du réseau social, dit utilisateur destinataire, et d'informations associées à ladite demande de dépôt de message comprenant le message et d'un identifiant d'utilisateur du réseau social (idps2, idps4) pour chaque utilisateur destinataire,
- un module d'identification (330 ; 530) d'au moins une ligne téléphonique (idcom2, idcom4) d'un réseau téléphonique associée, dans le réseau social, à un dit identifiant d'utilisateur du réseau social d'un utilisateur destinataire, en réponse à la réception de la demande de dépôt du message,
- un module de dépôt (340 ; 540), dudit premier message dans une boîte de messagerie du réseau téléphonique associée à la ligne téléphonique identifiée, la boîte de messagerie du réseau téléphonique étant gérée par un serveur de messagerie du réseau téléphonique dans lequel au moins un terminal associé avec la ligne téléphonique identifiée établit des communications téléphonique en utilisant la ligne téléphonique identifiée et
- un module d'envoi, dans le réseau téléphonique, d'une notification (350 ; 550) à destination du au moins un terminal (T2, T4) associé à la ligne téléphonique identifiée, la notification indiquant que le premier message est disponible dans la boite de messagerie du réseau téléphonique associée avec la ligne téléphonique identifiée et comprenant un identifiant d'utilisateur du réseau social affecté à l'utilisateur déposant.

19. Entité réseau selon la revendication 18, comprenant
- un module de réception (530) d'une demande de dépôt d'un deuxième message, en réponse au premier message, le deuxième message étant destiné à l'utilisateur déposant du premier message, et d'informations associées à ladite demande de dépôt du deuxième message comprenant le deuxième message et un identifiant d'utilisateur du réseau social de l'utilisateur déposant, destinataire du deuxième message,
- un module d'identification (530) d'au moins une deuxième ligne téléphonique d'un réseau téléphonique associée, dans le réseau social, à l'identifiant d'utilisateur du réseau social affecté à l'utilisateur déposant du premier message, destinataire du deuxième message, en réponse à la réception de la demande de dépôt du deuxième message,
- un module pour déclencher, pour au moins une dite deuxième ligne téléphonique identifiée, un dépôt (540) dudit deuxième message dans une boîte de messagerie du réseau téléphonique associée à la deuxième ligne téléphonique identifiée, la boîte de messagerie du réseau téléphonique étant gérée par un serveur de messagerie du réseau téléphonique dans lequel au moins un terminal associé avec la deuxième ligne téléphonique identifiée établit des communications téléphonique en utilisant la deuxième ligne téléphonique identifiée et
- un envoi (550), dans le réseau téléphonique, d'une notification à destination du au moins un terminal associé à la deuxième ligne téléphonique identifiée, la notification indiquant que le deuxième message est disponible dans la boite de messagerie du réseau téléphonique associée avec la deuxième ligne téléphonique identifiée et comprenant un identifiant d'utilisateur du réseau social affecté à l'utilisateur ayant demandé le dépôt du deuxième message.

20. Entité réseau selon la revendication 18 ou 19 comprenant :
- un module de réception (400), en provenance d'un terminal, d'une demande de consultation du premier message,
- un module d'envoi (410, 420) pour envoyer audit terminal un identifiant d'utilisateur du réseau social de l'utilisateur déposant du premier message et au moins une partie du contenu du premier message, ledit envoi déclenchant une restitution par le terminal dudit identifiant d'utilisateur du réseau social et de la partie du contenu.

21. Terminal comprenant un module d'envoi (310), à au moins une entité réseau, d'une demande de dépôt d'un message, provenant d'un utilisateur d'un réseau social, *dit utilisateur déposant,* destiné à au moins un utilisateur du réseau social, *dit utilisateur destinataire,* et d'informations associées à ladite demande de dépôt de message comprenant le message et un identifiant d'utilisateur du réseau social pour chaque utilisateur destinataire,
ledit envoi déclenchant :
- un dépôt (340), à partir de ladite au moins une entité réseau, dudit message dans une boîte de messagerie d'un réseau téléphonique associée à une ligne téléphonique du réseau téléphonique identifiée en réponse à l'envoi de la demande de dépôt du message, l'identifiant de la ligne téléphonique étant mémorisé, dans le réseau social, en association avec l'identifiant d'utilisateur du réseau social d'un utilisateur destinataire, la boîte de messagerie du réseau téléphonique étant gérée par un serveur de messagerie du réseau téléphonique dans lequel au moins un terminal associé avec la ligne téléphonique identifiée établit des communications téléphonique en utilisant la ligne téléphonique identifiée et
- un envoi (350), à partir de ladite au moins une entité réseau, dans le réseau téléphonique, d'une notification à destination du au moins un terminal associé à la ligne téléphonique,
la notification indiquant que le message est disponible dans la boite de messagerie du réseau téléphonique associée avec la ligne téléphonique identifiée et comprenant un identifiant d'utilisateur du réseau social affecté à l'utilisateur déposant.

22. Terminal selon la revendication 21, comprenant un module d'envoi (510), à au moins une entité réseau, d'une demande de dépôt d'un deuxième message, en réponse à un premier message déposé dans ladite boîte de messagerie, le deuxième message étant destiné à l'utilisateur déposant du premier message, et d'informations associées à ladite demande de dépôt du deuxième message comprenant le deuxième message et un identifiant d'utilisateur du réseau social de l'utilisateur déposant, destinataire du deuxième message,
ladite demande de dépôt déclenchant, pour une deuxième ligne téléphonique associée à l'identifiant d'utilisateur du réseau social affecté à l'utilisateur déposant du premier message :
- un dépôt (540), à partir de ladite au moins une entité réseau, du deuxième message dans une boîte de messagerie d'un réseau téléphonique associée à la deuxième ligne téléphonique du réseau téléphonique identifiée en réponse à l'envoi de la demande de dépôt du deuxième message, l'identifiant de la ligne téléphonique étant mémorisé, dans le réseau social, en association avec l'identifiant d'utilisateur du réseau social de l'utilisateur déposant, la boîte de messagerie du réseau téléphonique étant gérée par un serveur de messagerie du réseau téléphonique dans lequel au moins un terminal associé avec la deuxième ligne téléphonique identifiée établit des communications téléphonique en utilisant la deuxième ligne téléphonique identifiée et
- un envoi (550), à partir de ladite au moins une entité réseau, dans le réseau téléphonique, d'une notification à destination du au moins un terminal associé à la deuxième ligne téléphonique,
la notification indiquant que le deuxième message est disponible dans la boite de messagerie du réseau téléphonique associée avec la deuxième ligne téléphonique identifiée et comprenant un identifiant d'utilisateur du réseau social affecté à l'utilisateur ayant demandé le dépôt du deuxième message.

23. Terminal selon la revendication 21 ou 22, comprenant:
- un module d'envoi (400) d'une demande de consultation d'au moins un message déposé dans ladite boîte de messagerie;
- pour au moins un premier message déposé sur demande d'un utilisateur d'un réseau social, *dit utilisateur déposant,* un module de réception et de restitution (410, 420) d'un identifiant d'utilisateur du réseau social affecté à l'utilisateur déposant dans un réseau social et d'au moins une partie du contenu du premier message.

## Patentansprüche

1. Verfahren zur Verarbeitung einer Anforderung zum Hinterlassen einer Nachricht von einem Benutzer (U1) eines sozialen Netzwerks, "hinterlassender Benutzer" genannt, welches die folgenden Schritte umfasst, die von wenigstens einer Netzentität ausgeführt werden:
- einen Schritt des Empfangs (330; 530), durch wenigstens eine Netzentität, einer Anforderung zum Hinterlassen einer Nachricht, die für wenigstens einen Benutzer (U2, U4) des sozialen Netzwerks, "Zielbenutzer" genannt, bestimmt ist, und von dieser Anforderung zum Hinterlassen einer Nachricht zugeordneten Informationen, welche die Nachricht und eine Benutzerkennung im sozialen Netzwerk (idps2, idps4) für jeden Zielbenutzer umfassen,
- einen Schritt der Identifizierung (330; 530), in der wenigstens einen Netzentität, wenigstens einer Telefonleitung (idcom2, idcom4) eines Telefonnetzes, die in dem sozialen Netzwerk der Benutzerkennung eines Zielbenutzers im sozialen Netzwerk zugeordnet ist, in Reaktion auf den Empfang der Anforderung zum Hinterlassen der Nachricht,
- einen Schritt des Hinterlassens (340; 540), von der wenigstens einen Netzentität aus, der Nachricht in einer Mailbox des Telefonnetzes, die der identifizierten Telefonleitung zugeordnet ist, wobei die Mailbox des Telefonnetzes von einem Mailserver des Telefonnetzes verwaltet wird, in welchem wenigstens ein Endgerät, das der identifizierten Telefonleitung zugeordnet ist, unter Verwendung der identifizierten Telefonleitung Telefonverbindungen herstellt, und
- einen Schritt des Sendens, von der wenigstens einen Netzentität aus in dem Telefonnetz, einer Benachrichtigung (350; 550) an das wenigstens eine Endgerät (T2, T4), das der identifizierten Telefonleitung zugeordnet ist, wobei die Benachrichtigung anzeigt, dass die Nachricht in der Mailbox des Telefonnetzes, die der identifizierten Telefonleitung zugeordnet ist, verfügbar ist, und eine Benutzerkennung im sozialen Netzwerk umfasst, die dem hinterlassenden Benutzer zugewiesen ist.

2. Verfahren zur Verarbeitung nach Anspruch 1, wobei die Benutzerkennung des hinterlassenden Benutzers im sozialen Netzwerk eine Kennung ist, unter welcher der hinterlassende Benutzer dem Zielbenutzer im sozialen Netzwerk bekannt ist, und/oder die Benutzerkennung des Zielbenutzers im sozialen Netzwerk eine Kennung ist, unter welcher der Zielbenutzer dem hinterlassenden Benutzer im sozialen Netzwerk bekannt ist.

3. Verfahren zur Verarbeitung nach Anspruch 1 oder 2, wobei die Benutzerkennung des hinterlassenden Benutzers im sozialen Netzwerk eine Kennung ist, welche die tatsächliche Identität des hinterlassenden Benutzers nicht offenbart, und/oder die Benutzerkennung des Zielbenutzers im sozialen Netzwerk eine Kennung ist, welche die tatsächliche Identität des Zielbenutzers nicht offenbart.

4. Verfahren zur Verarbeitung nach einem der vorhergehenden Ansprüche, wobei die Kennung der Telefonleitung in Benutzerprofildaten dieses Zielbenutzers im sozialen Netzwerk gespeichert ist, welche für den hinterlassenden Benutzer nicht über das soziale Netzwerk zugänglich sind.

5. Verfahren zur Verarbeitung einer Anforderung zum Hinterlassen einer Nachricht nach Anspruch 1, welches einen Schritt der Speicherung, in Verbindung mit der hinterlassenen Nachricht, einer Benutzerkennung des hinterlassenden Benutzers und des oder der Zielbenutzer im sozialen Netzwerk umfasst.

6. Verfahren zur Verarbeitung einer Anforderung zum Hinterlassen einer Nachricht nach Anspruch 1, welches einen Schritt der Speicherung, in Verbindung mit der hinterlassenen Nachricht, einer Kennung der Telefonleitung für den hinterlassenden Benutzer und den oder die Zielbenutzer umfasst.

7. Verfahren zur Verarbeitung einer Anforderung zum Hinterlassen einer Nachricht nach Anspruch 1, wobei die Anforderung zum Hinterlassen einer Nachricht von einem Dienst für Anforderungen zum Hinterlassen einer Nachricht in Empfang genommen wird, welcher in einen Dienst des sozialen Netzwerks integriert ist, dem der hinterlassende Benutzer und der Zielbenutzer angehören.

8. Verfahren zur Verarbeitung einer Anforderung zum Hinterlassen einer Nachricht nach Anspruch 1, wobei die Anforderung zum Hinterlassen einer Nachricht von einem Dienst für Anforderungen zum Hinterlassen einer Nachricht in Empfang genommen wird, welcher in einen Dienst zum Hinterlassen von Nachrichten des Telefonnetzes integriert ist.

9. Verfahren zur Verarbeitung einer Anforderung zum Hinterlassen einer Nachricht nach Anspruch 1, welches einen Schritt der Präsentation einer Liste von Benutzern des sozialen Netzwerks gegenüber dem hinterlassenden Benutzer umfasst, aus welcher wenigstens ein Zielbenutzer auszuwählen ist, wobei die Liste aus einer Liste von Benutzern, die mit dem hinterlassenden Benutzer in einem sozialen Netzwerk verbunden sind, erstellt wird.

10. Verfahren zur Verarbeitung einer Anforderung zum Hinterlassen einer Nachricht nach Anspruch 1, wobei die identifizierte Telefonleitung eine Telefonleitung eines besagten Zielbenutzers ist, von der eine Identifikation in Verbindung mit einer Benutzerkennung im sozialen Netzwerk, die diesem Zielbenutzer zugewiesen ist, gespeichert worden ist.

11. Verfahren zur Verarbeitung einer Anforderung zum Hinterlassen einer Nachricht nach Anspruch 1, wobei die identifizierte Telefonleitung eine Telefonleitung ist, die aus mehreren Telefonleitungen eines besagten Zielbenutzers in Abhängigkeit von einem Kriterium ausgewählt ist, das sich auf die Verbindung zwischen dem hinterlassenden und dem betreffenden Zielbenutzer in dem sozialen Netzwerk bezieht.

12. Verfahren zur Verarbeitung einer Anforderung zum Hinterlassen einer Nachricht nach Anspruch 1, wobei die identifizierte Telefonleitung eine Telefonleitung ist, die aus mehreren Telefonleitungen eines besagten Zielbenutzers in Abhängigkeit von einem Kriterium ausgewählt ist, das sich auf den hinterlassenden Benutzer der Nachricht und/oder auf den betreffenden Zielbenutzer bezieht.

13. Verfahren zur Verarbeitung einer Anforderung zum Hinterlassen einer Antwortnachricht, wobei das Verfahren die folgenden Schritte umfasst, die von wenigstens einer Netzentität ausgeführt werden:
- einen Schritt des Empfangs (530), durch wenigstens eine Netzentität,
• einer Anforderung zum Hinterlassen einer zweiten Nachricht, in Reaktion auf eine erste Nachricht von einem Benutzer eines sozialen Netzwerks, "hinterlassender Benutzer" genannt, an einen Benutzer des sozialen Netzwerks, "Zielbenutzer" genannt, die in einer Mailbox einer Telefonleitung mittels eines Verfahrens zur Verarbeitung einer Anforderung zum Hinterlassen einer Nachricht nach einem der Ansprüche 1 bis 12 hinterlassen wurde, wobei die zweite Nachricht für den hinterlassenden Benutzer der ersten Nachricht bestimmt ist, und
• von der Anforderung zum Hinterlassen der zweiten Nachricht zugeordneten Informationen, welche die zweite Nachricht und eine Benutzerkennung des hinterlassenden Benutzers, welcher der Adressat der zweiten Nachricht ist, im sozialen Netzwerk umfassen,
- einen Schritt der Identifizierung (530), in der wenigstens einen Netzentität, wenigstens einer zweiten Telefonleitung eines Telefonnetzes, die in dem sozialen Netzwerk der Benutzerkennung im sozialen Netzwerk zugeordnet ist, die dem hinterlassenden Benutzer der ersten Nachricht, welcher der Adressat der zweiten Nachricht ist, zugewiesen ist, in Reaktion auf den Empfang der Anforderung zum Hinterlassen der zweiten Nachricht,
- einen Schritt zum Auslösen, für wenigstens eine besagte identifizierte zweite Telefonleitung, eines Hinterlassens (540), von der wenigstens einen Netzentität aus, der zweiten Nachricht in einer Mailbox des Telefonnetzes, die der identifizierten zweiten Telefonleitung zugeordnet ist, wobei die Mailbox des Telefonnetzes von einem Mailserver des Telefonnetzes verwaltet wird, in welchem wenigstens ein Endgerät, das der identifizierten zweiten Telefonleitung zugeordnet ist, unter Verwendung der identifizierten zweiten Telefonleitung Telefonverbindungen herstellt, und
- ein Senden (550), von der wenigstens einen Netzentität aus in dem Telefonnetz, einer Benachrichtigung an das wenigstens eine Endgerät, das der identifizierten zweiten Telefonleitung zugeordnet ist, wobei die Benachrichtigung anzeigt, dass die zweite Nachricht in der Mailbox des Telefonnetzes, die der identifizierten zweiten Telefonleitung zugeordnet ist, verfügbar ist, und eine Benutzerkennung im sozialen Netzwerk umfasst, die dem Benutzer zugewiesen ist, der das Hinterlassen der zweiten Nachricht angefordert hat.

14. Verfahren zur Verarbeitung einer Anforderung zum Hinterlassen einer Antwortnachricht nach Anspruch 13, welches umfasst:
- einen Schritt des Empfangs (530) einer Anforderung zum Hinterlassen einer dritten Nachricht in Reaktion auf die zweite Nachricht,
- einen Schritt der Identifizierung (530) wenigstens einer dritten Telefonleitung, die der Benutzerkennung im sozialen Netzwerk zugeordnet ist, die dem hinterlassenden Benutzer der zweiten Nachricht zugewiesen ist,
- einen Schritt zum Auslösen, für wenigstens eine besagte identifizierte dritte Telefonleitung, eines Hinterlassens (540) der dritten Nachricht in einer Mailbox, die der identifizierten dritten Telefonleitung zugeordnet ist, und ein Senden (550) einer Benachrichtigung über das Hinterlassen der dritten Nachricht an wenigstens ein Endgerät, das der identifizierten dritten Telefonleitung zugeordnet ist, wobei die Benachrichtigung eine Benutzerkennung im sozialen Netzwerk umfasst, die dem Benutzer zugewiesen ist, der das Hinterlassen der dritten Nachricht angefordert hat.

15. Verfahren zur Anforderung des Hinterlassens einer Nachricht von einem Benutzer eines sozialen Netzwerks, "hinterlassender Benutzer" genannt, wobei das Verfahren umfasst:
einen Schritt des Sendens (310), an wenigstens eine Netzentität, einer Anforderung zum Hinterlassen einer Nachricht, die für wenigstens einen Benutzer des sozialen Netzwerks, "Zielbenutzer" genannt, bestimmt ist, und von dieser Anforderung zum Hinterlassen einer Nachricht zugeordneten Informationen, welche die Nachricht und eine Benutzerkennung im sozialen Netzwerk für jeden Zielbenutzer umfassen, wobei das Senden (310) der Anforderung auslöst:
- ein Hinterlassen (340), von der wenigstens einen Netzentität aus, der Nachricht in einer Mailbox eines Telefonnetzes, die einer in Reaktion auf das Senden der Anforderung zum Hinterlassen der Nachricht identifizierten Telefonleitung des Telefonnetzes zugeordnet ist, wobei die Kennung der Telefonleitung im sozialen Netzwerk in Verbindung mit der Benutzerkennung eines Zielbenutzers im sozialen Netzwerk gespeichert ist, wobei die Mailbox des Telefonnetzes von einem Mailserver des Telefonnetzes verwaltet wird, in welchem wenigstens ein Endgerät, das der identifizierten Telefonleitung zugeordnet ist, unter Verwendung der identifizierten Telefonleitung Telefonverbindungen herstellt, und
- ein Senden (350), von der wenigstens einen Netzentität aus in dem Telefonnetz, einer Benachrichtigung an das wenigstens eine Endgerät, das der Telefonleitung zugeordnet ist, wobei die Benachrichtigung anzeigt, dass die Nachricht in der Mailbox des Telefonnetzes, die der identifizierten Telefonleitung zugeordnet ist, verfügbar ist, und eine Benutzerkennung im sozialen Netzwerk umfasst, die dem hinterlassenden Benutzer zugewiesen ist.

16. Verfahren zur Anforderung des Hinterlassens einer Antwortnachricht, wobei das Verfahren umfasst
- einen Schritt des Sendens (510), an wenigstens eine Netzentität,
• einer Anforderung zum Hinterlassen einer zweiten Nachricht, in Reaktion auf eine erste Nachricht von einem Benutzer eines sozialen Netzwerks, "hinterlassender Benutzer" genannt, an einen Benutzer des sozialen Netzwerks, "Zielbenutzer" genannt, die in einer Mailbox einer Telefonleitung mittels eines Verfahrens zur Anforderung des Hinterlassens einer Nachricht nach Anspruch 15 hinterlassen wurde, wobei die zweite Nachricht für den hinterlassenden Benutzer der ersten Nachricht bestimmt ist, und
• von der Anforderung zum Hinterlassen der zweiten Nachricht zugeordneten Informationen, welche die zweite Nachricht und eine Benutzerkennung des hinterlassenden Benutzers, welcher der Adressat der zweiten Nachricht ist, im sozialen Netzwerk umfassen, wobei die Anforderung zum Hinterlassen auslöst, für eine zweite Telefonleitung, die der Benutzerkennung im sozialen Netzwerk zugeordnet ist, die dem hinterlassenden Benutzer der ersten Nachricht zugewiesen ist:
• ein Hinterlassen (540), von der wenigstens einen Netzentität aus, der zweiten Nachricht in einer Mailbox eines Telefonnetzes, die der in Reaktion auf das Senden der Anforderung zum Hinterlassen der zweiten Nachricht identifizierten zweiten Telefonleitung des Telefonnetzes zugeordnet ist, wobei die Kennung der Telefonleitung im sozialen Netzwerk in Verbindung mit der Benutzerkennung des hinterlassenden Benutzers im sozialen Netzwerk gespeichert ist, wobei die Mailbox des Telefonnetzes von einem Mailserver des Telefonnetzes verwaltet wird, in welchem wenigstens ein Endgerät, das der identifizierten zweiten Telefonleitung zugeordnet ist, unter Verwendung der identifizierten zweiten Telefonleitung Telefonverbindungen herstellt, und
• ein Senden (550), von der wenigstens einen Netzentität aus in dem Telefonnetz, einer Benachrichtigung an das wenigstens eine Endgerät, das der zweiten Telefonleitung zugeordnet ist,
wobei die Benachrichtigung anzeigt, dass die zweite Nachricht in der Mailbox des Telefonnetzes, die der identifizierten zweiten Telefonleitung zugeordnet ist, verfügbar ist, und eine Benutzerkennung im sozialen Netzwerk umfasst, die dem Benutzer zugewiesen ist, der das Hinterlassen der zweiten Nachricht angefordert hat.

17. Aufzeichnungsmedium, das von einem Datenprozessor lesbar ist und auf dem ein Programm aufgezeichnet ist, das Programmcodeanweisungen zur Ausführung der Schritte eines Verfahrens nach einem der Ansprüche 1 bis 16 umfasst.

18. Netzentität, welche umfasst:
- ein Modul zum Empfang (330; 530) einer Anforderung zum Hinterlassen einer ersten Nachricht von einem Benutzer (U1) eines sozialen Netzwerks, "hinterlassender Benutzer" genannt, die für wenigstens einen Benutzer (U2, U4) des sozialen Netzwerks, "Zielbenutzer" genannt, bestimmt ist, und von dieser Anforderung zum Hinterlassen einer Nachricht zugeordneten Informationen, welche die Nachricht und eine Benutzerkennung im sozialen Netzwerk (idps2, idps4) für jeden Zielbenutzer umfassen,
- ein Modul zur Identifizierung (330; 530) wenigstens einer Telefonleitung (idcom2, idcom4) eines Telefonnetzes, die in dem sozialen Netzwerk einer besagten Benutzerkennung eines Zielbenutzers im sozialen Netzwerk zugeordnet ist, in Reaktion auf den Empfang der Anforderung zum Hinterlassen der Nachricht,
- ein Modul zum Hinterlassen (340; 540) der ersten Nachricht in einer Mailbox des Telefonnetzes, die der identifizierten Telefonleitung zugeordnet ist, wobei die Mailbox des Telefonnetzes von einem Mailserver des Telefonnetzes verwaltet wird, in welchem wenigstens ein Endgerät, das der identifizierten Telefonleitung zugeordnet ist, unter Verwendung der identifizierten Telefonleitung Telefonverbindungen herstellt, und
- ein Modul zum Senden, in dem Telefonnetz, einer Benachrichtigung (350; 550) an das wenigstens eine Endgerät (T2, T4), das der identifizierten Telefonleitung zugeordnet ist, wobei die Benachrichtigung anzeigt, dass die erste Nachricht in der Mailbox des Telefonnetzes, die der identifizierten Telefonleitung zugeordnet ist, verfügbar ist, und eine Benutzerkennung im sozialen Netzwerk umfasst, die dem hinterlassenden Benutzer zugewiesen ist.

19. Netzentität nach Anspruch 18, welche umfasst:
- ein Modul zum Empfang (530) einer Anforderung zum Hinterlassen einer zweiten Nachricht in Reaktion auf die erste Nachricht, wobei die zweite Nachricht für den hinterlassenden Benutzer der ersten Nachricht bestimmt ist, und von der Anforderung zum Hinterlassen der zweiten Nachricht zugeordneten Informationen, welche die zweite Nachricht und eine Benutzerkennung des hinterlassenden Benutzers, welcher der Adressat der zweiten Nachricht ist, im sozialen Netzwerk umfassen,
- ein Modul zur Identifizierung (530) wenigstens einer zweiten Telefonleitung eines Telefonnetzes, die in dem sozialen Netzwerk der Benutzerkennung im sozialen Netzwerk zugeordnet ist, die dem hinterlassenden Benutzer der ersten Nachricht, welcher der Adressat der zweiten Nachricht ist, zugewiesen ist, in Reaktion auf den Empfang der Anforderung zum Hinterlassen der zweiten Nachricht,
- ein Modul zum Auslösen, für wenigstens eine besagte identifizierte zweite Telefonleitung, eines Hinterlassens (540) der zweiten Nachricht in einer Mailbox des Telefonnetzes, die der identifizierten zweiten Telefonleitung zugeordnet ist, wobei die Mailbox des Telefonnetzes von einem Mailserver des Telefonnetzes verwaltet wird, in welchem wenigstens ein Endgerät, das der identifizierten zweiten Telefonleitung zugeordnet ist, unter Verwendung der identifizierten zweiten Telefonleitung Telefonverbindungen herstellt, und
- ein Senden (550), in dem Telefonnetz, einer Benachrichtigung an das wenigstens eine Endgerät, das der identifizierten zweiten Telefonleitung zugeordnet ist, wobei die Benachrichtigung anzeigt, dass die zweite Nachricht in der Mailbox des Telefonnetzes, die der identifizierten zweiten Telefonleitung zugeordnet ist, verfügbar ist, und eine Benutzerkennung im sozialen Netzwerk umfasst, die dem Benutzer zugewiesen ist, der das Hinterlassen der zweiten Nachricht angefordert hat.

20. Netzentität nach Anspruch 18 oder 19, welche umfasst:
- ein Modul zum Empfang (400), von einem Endgerät, einer Anforderung zum Abrufen der ersten Nachricht,
- ein Sendemodul (410, 420) zum Senden einer Benutzerkennung des hinterlassenden Benutzers der ersten Nachricht im sozialen Netzwerk und wenigstens eines Teils des Inhalts der ersten Nachricht an das Endgerät, wobei das Senden eine Wiedergabe dieser Benutzerkennung im sozialen Netzwerk und des Teils des Inhalts durch das Endgerät auslöst.

21. Endgerät, umfassend ein Modul zum Senden (310), an wenigstens eine Netzentität, einer Anforderung zum Hinterlassen einer Nachricht von einem Benutzer eines sozialen Netzwerks, "hinterlassender Benutzer" genannt, die für wenigstens einen Benutzer des sozialen Netzwerks, "Zielbenutzer" genannt, bestimmt ist, und von dieser Anforderung zum Hinterlassen einer Nachricht zugeordneten Informationen, welche die Nachricht und eine Benutzerkennung im sozialen Netzwerk für jeden Zielbenutzer umfassen,
wobei das Senden auslöst:
- ein Hinterlassen (340), von der wenigstens einen Netzentität aus, der Nachricht in einer Mailbox des Telefonnetzes, die einer in Reaktion auf das Senden der Anforderung zum Hinterlassen der Nachricht identifizierten Telefonleitung des Telefonnetzes zugeordnet ist, wobei die Kennung der Telefonleitung im sozialen Netzwerk in Verbindung mit der Benutzerkennung eines Zielbenutzers im sozialen Netzwerk gespeichert ist, wobei die Mailbox des Telefonnetzes von einem Mailserver des Telefonnetzes verwaltet wird, in welchem wenigstens ein Endgerät, das der identifizierten Telefonleitung zugeordnet ist, unter Verwendung der identifizierten Telefonleitung Telefonverbindungen herstellt, und
- ein Senden (350), von der wenigstens einen Netzentität aus in dem Telefonnetz, einer Benachrichtigung an das wenigstens eine Endgerät, das der Telefonleitung zugeordnet ist,
wobei die Benachrichtigung anzeigt, dass die Nachricht in der Mailbox des Telefonnetzes, die der identifizierten Telefonleitung zugeordnet ist, verfügbar ist, und eine Benutzerkennung im sozialen Netzwerk umfasst, die dem hinterlassenden Benutzer zugewiesen ist.

22. Endgerät nach Anspruch 21, umfassend ein Modul zum Senden (510), an wenigstens eine Netzentität, einer Anforderung zum Hinterlassen einer zweiten Nachricht in Reaktion auf eine in der Mailbox hinterlassene erste Nachricht, wobei die zweite Nachricht für den hinterlassenden Benutzer der ersten Nachricht bestimmt ist, und von der Anforderung zum Hinterlassen der zweiten Nachricht zugeordneten Informationen, welche die zweite Nachricht und eine Benutzerkennung des hinterlassenden Benutzers, welcher der Adressat der zweiten Nachricht ist, im sozialen Netzwerk umfassen,
wobei die Anforderung zum Hinterlassen auslöst, für eine zweite Telefonleitung, die der Benutzerkennung im sozialen Netzwerk zugeordnet ist, die dem hinterlassenden Benutzer der ersten Nachricht zugewiesen ist:
- ein Hinterlassen (540), von der wenigstens einen Netzentität aus, der zweiten Nachricht in einer Mailbox eines Telefonnetzes, die der in Reaktion auf das Senden der Anforderung zum Hinterlassen der zweiten Nachricht identifizierten zweiten Telefonleitung des Telefonnetzes zugeordnet ist, wobei die Kennung der Telefonleitung im sozialen Netzwerk in Verbindung mit der Benutzerkennung des hinterlassenden Benutzers im sozialen Netzwerk gespeichert ist, wobei die Mailbox des Telefonnetzes von einem Mailserver des Telefonnetzes verwaltet wird, in welchem wenigstens ein Endgerät, das der identifizierten zweiten Telefonleitung zugeordnet ist, unter Verwendung der identifizierten zweiten Telefonleitung Telefonverbindungen herstellt, und
- ein Senden (550), von der wenigstens einen Netzentität aus in dem Telefonnetz, einer Benachrichtigung an das wenigstens eine Endgerät, das der zweiten Telefonleitung zugeordnet ist,
wobei die Benachrichtigung anzeigt, dass die zweite Nachricht in der Mailbox des Telefonnetzes, die der identifizierten zweiten Telefonleitung zugeordnet ist, verfügbar ist, und eine Benutzerkennung im sozialen Netzwerk umfasst, die dem Benutzer zugewiesen ist, der das Hinterlassen der zweiten Nachricht angefordert hat.

23. Endgerät nach Anspruch 21 oder 22, welches umfasst:
- ein Modul zum Senden (400) einer Anforderung zum Abrufen wenigstens einer Nachricht, die in der Mailbox hinterlassen wurde;
- für wenigstens eine erste Nachricht, die auf Anforderung eines Benutzers eines sozialen Netzwerks, "hinterlassender Benutzer" genannt, hinterlassen wurde, ein Modul zum Empfang und zur Wiedergabe (410, 420) einer Benutzerkennung im sozialen Netzwerk, die einem hinterlassenden Benutzer in einem sozialen Netzwerk zugeordnet ist, und wenigstens eines Teils des Inhalts der ersten Nachricht.

## Claims

1. Method of processing a message posting request originating from a social network user (U1), *called posting user,* comprising the following steps performed by at least one network entity:
- a step (330; 530) of receiving, by at least one network entity, a request for posting of a message intended for at least one social network user (U2, U4), called addressee user, and information associated to said message posting request comprising the message and a social network user identifier (idps2, idps4) for each addressee user,
- a step (330; 530) of identifying, in said at least one network entity, at least one telephone network's telephone line (idcom2, idcom4) associated, in the social network, with the social network user identifier of an addressee user, in response to receiving the request for posting of the message,
- a step (340; 540) of posting, from said at least one network entity, said message in a telephone network's mailbox associated with the identified telephone line, the mailbox of the telephone network being managed by a messaging server of the telephone network in which at least one terminal associated with the identified telephone line establishes telephone communications by using the identified telephone line and
- a step of dispatching, from said at least one network entity, in the telephone network, a notification (350; 550) intended for the at least one terminal (T2, T4) associated with the identified telephone line, the notification indicating that the message is available in the telephone network's mailbox associated with the identified telephone line and comprising a social network user identifier assigned to the posting user.

2. Method of processing according to Claim 1, in which the posting user's social network user identifier is an identifier under which the posting user is known to the addressee user in the social network and/or the addressee user's social network user identifier is an identifier under which the addressee user is known to the posting user in the social network.

3. Method of processing according to Claim 1 or 2, in which the posting user's social network user identifier is an identifier not disclosing the real identity of the posting user and/or the addressee user's social network user identifier is an identifier not disclosing the real identity of the addressee user.

4. Method of processing according to any one of the preceding claims, in which the identification of the telephone line is stored in social network user profile data of this addressee user which are not accessible to the posting user through the social network.

5. Method of processing a message posting request according to Claim 1, comprising a step of storing, in association with the posted message, a social network user identifier of the posting user and of the addressee user or users.

6. Method of processing a message posting request according to Claim 1, comprising a step of storing, in association with the posted message, a telephone line identification for the posting user and the addressee user or users.

7. Method of processing a message posting request according to Claim 1, in which the message posting request is received by a message posting request service which is integrated into a service of the social network to which the posting user and the addressee user belong.

8. Method of processing a message posting request according to Claim 1, in which the message posting request is received by a message posting request service which is integrated into a message posting service of the telephone network.

9. Method of processing a message posting request according to Claim 1, comprising a step of presenting to the posting user a list of users of the social network from which list at least one addressee user is to be selected, said list being constructed on the basis of a list of users linked with the posting user in a social network.

10. Method of processing a message posting request according to Claim 1, in which the telephone line identified is a telephone line of a said addressee user, of which an identification has been stored in association with a social network user identifier assigned to this addressee user.

11. Method of processing a message posting request according to Claim 1, in which the telephone line identified is a telephone line selected from among several telephone lines of a *said addressee user* as a function of a criterion relating to the link in the social network between the posting user and the addressee user concerned.

12. Method of processing a message posting request according to Claim 1, in which the telephone line identified is a telephone line selected from among several telephone lines of a *said addressee user* as a function of a criterion relating to the user posting the message and/or to the addressee user concerned.

13. Method of processing a response message posting request, the method comprising the following steps performed by at least one network entity:
- a step (530) of receiving, by at least one network entity,
• a request for posting of a second message, in response to a first message, originating from a social network user, *called posting user,* intended for a social network user, called the addressee user, posted in a mailbox of a telephone line by means of a method of processing a message posting request according to any one of Claims 1 to 12, the second message being intended for the user posting the first message, and
• information associated with said request for posting of the second message comprising the second message and a social network user identifier of the posting user, addressee of the second message,
- a step (530) of identifying, in said at least one network entity, at least one second telephone network's telephone line associated, in the social network, with the social network user identifier assigned to the user posting the first message, addressee of the second message, in response to the receiving the request for posting the second message,
- a step for triggering, for at least one said second identified telephone line, a posting (540), from said at least one network entity, of said second message in a telephone network's mailbox associated with the second identified telephone line, the telephone network's mailbox being managed by a messaging server of the telephone network in which at least one terminal associated with the second identified telephone line establishes telephone communications by using the second identified telephone line and
- a dispatching (550), from said at least one network entity, in the telephone network, of a notification intended for the at least one terminal associated with the second telephone line identified, the notification indicating that the second message is available in the telephone network's mailbox associated with the second identified telephone line and comprising a social network user identifier assigned to the user who requested the posting of the second message.

14. Method of processing a response message posting request according to Claim 13, comprising
- a step (530) of receiving a request for posting of a third message, in response to the second message,
- a step (530) of identifying at least one third telephone line associated with the social network user identifier assigned to the user posting the second message,
- a step for triggering, for at least one said third identified telephone line, a posting (540) of said third message in a mailbox associated with the third identified telephone line and a dispatching (550) of a notification of posting of said third message intended for at least one terminal associated with the third identified telephone line, the notification comprising a social network user identifier assigned to the user who requested the posting of the third message.

15. Method of requesting message posting, originating from a social network user, *called the posting user,* the method comprising:
a step (310) of dispatching, to at least one network entity, a request for posting of a message, intended for at least one social network user, *called the addressee user,* and information associated with said message posting request comprising the message and a social network user identifier for each addressee user, the dispatching (310) of said request triggering:
- a posting (340), from said at least one network entity, of said message in a telephone network's mailbox associated with a telephone network's telephone line identified in response to the dispatching of the message posting request, the identifier of the telephone line being stored, in the social network, in association with the social network user identifier of an addressee user, the telephone network's mailbox being managed by a messaging server of the telephone network in which at least one terminal associated with the identified telephone line establishes telephone communications by using the identified telephone line and
- a dispatching (350), from said at least one network entity, in the telephone network, of a notification intended for the at least one terminal associated with the telephone line, the notification indicating that the message is available in the telephone network's mailbox associated with the identified telephone line and comprising a social network user identifier assigned to the posting user.

16. Method of requesting posting of a response message, the method comprising,
- a step (510) of dispatching, from at least one network entity,
• a request for posting of a second message, in response to a first message that originated from a social network user, *called the posting user,* intended for a social network user, called the addressee user, posted in a mailbox of a telephone line by means of a method of requesting message posting according to Claim 15, the second message being intended for the user posting the first message, and
• information associated with said request for posting of the second message comprising the second message and a social network user identifier of the posting user, addressee of the second message,
said request for posting triggering, for a second telephone line associated with the social network user identifier assigned to the user posting the first message:
• a posting (540), from said at least one network entity, of the second message in a telephone network's mailbox associated with the second telephone network's telephone line identified in response to the dispatching of the request for posting of the second message, the identifier of the telephone line being stored, in the social network, in association with the social network user identifier of the posting user, the telephone network's mailbox being managed by a messaging server of the telephone network in which at least one terminal associated with the second identified telephone line establishes telephone communications by using the second identified telephone line and
• a dispatching (550), from said at least one network entity, in the telephone network, of a notification intended for the at least one terminal associated with the second telephone line,
the notification indicating that the second message is available in the telephone network's mailbox associated with the second identified telephone line and comprising a social network user identifier assigned to the user who requested the posting of the second message.

17. Recording medium readable by a data processor on which is recorded a program comprising program code instructions for the execution of the steps of a method according to any one of Claims 1 to 16.

18. Network entity comprising
- a reception module (330; 530) for receiving a request for posting of a first message, originating from a social network user (U1), *called a posting user,* intended for at least one social network user (U2, U4), called an addressee user, and information associated with said message posting request comprising the message and a social network user identifier (idps2, idps4) for each addressee user,
- an identification module (330; 530) for identifying at least one telephone network's telephone line (idcom2, idcom4) associated, in the social network, with a said social network user identifier of an addressee user, in response to receiving the request for posting of the message,
- a posting module (340; 540), for posting said first message in a telephone network's mailbox associated with the identified telephone line, the telephone network's mailbox being managed by a messaging server of the telephone network in which at least one terminal associated with the identified telephone line establishes telephone communications by using the identified telephone line and
- a module for dispatching, in the telephone network, a notification (350; 550) intended for the at least one terminal (T2, T4) associated with the identified telephone line, the notification indicating that the first message is available in the telephone network's mailbox associated with the identified telephone line and comprising a social network user identifier assigned to the posting user.

19. Network entity according to Claim 18, comprising
- a reception module (530) for receiving a request for posting of a second message, in response to the first message, the second message being intended for the user posting the first message, and information associated with said request for posting of the second message comprising the second message and a social network user identifier of the posting user, addressee of the second message,
- an identification module (530) for identifying at least one second telephone network's telephone line associated, in the social network, with the social network user identifier assigned to the user posting the first message, addressee of the second message, in response to receiving the request for posting of the second message,
- a module for triggering, for at least one said second telephone line identified, a posting (540) of said second message in a telephone network's mailbox associated with the second identified telephone line, the mailbox of the telephone network being managed by a messaging server of the telephone network in which at least one terminal associated with the second identified telephone line establishes telephone communications by using the second identified telephone line and
- a dispatching (550), in the telephone network, of a notification intended for the at least one terminal associated with the second identified telephone line, the notification indicating that the second message is available in the telephone network's mailbox associated with the second identified telephone line and comprising a social network user identifier assigned to the user who requested the posting of the second message.

20. Network entity according to Claim 18 or 19 comprising:
- a reception module (400) for receiving, originating from a terminal, a request for consultation of the first message,
- a dispatching module (410, 420) for dispatching to said terminal a social network user identifier of the user posting the first message and at least one part of the content of the first message, said dispatching triggering a rendering by the terminal of said social network user identifier and of the part of the content.

21. Terminal comprising a dispatching module (310) for dispatching, to at least one network entity, a request for posting of a message, originating from a social network user, *called the posting user,* intended for at least one social network user, *called the addressee user,* and information associated with said message posting request comprising the message and a social network user identifier for each addressee user,
said dispatching triggering:
- a posting (340), from said at least one network entity, of said message in a telephone network's mailbox associated with a telephone network's telephone line identified in response to the dispatching of the message posting request, the telephone line's identifier being stored, in the social network, in association with the social network user identifier of an addressee user, the mailbox of the telephone network being managed by a messaging server of the telephone network in which at least one terminal associated with the identified telephone line establishes telephone communications by using the identified telephone line and
- a dispatching (350), from said at least one network entity, in the telephone network, of a notification intended for the at least one terminal associated with the telephone line,
the notification indicating that the message is available in the telephone network's mailbox associated with the identified telephone line and comprising a social network user identifier assigned to the posting user.

22. Terminal according to Claim 21, comprising a dispatching module (510) for dispatching, to at least one network entity, a request for posting of a second message, in response to a first message posted in said mailbox, the second message being intended for the user posting the first message, and information associated with said request for posting of the second message comprising the second message and a social network user identifier of the posting user, addressee of the second message,
said posting request triggering, for a second telephone line associated with the social network user identifier assigned to the user posting the first message:
- a posting (540), from said at least one network entity, of the second message in a telephone network's mailbox associated with the second telephone network's telephone line identified in response to the dispatching of the request for posting of the second message, the telephone line's identifier being stored, in the social network, in association with the social network user identifier of the posting user, the mailbox of the telephone network being managed by a messaging server of the telephone network in which at least one terminal associated with the second identified telephone line establishes telephone communications by using the second identified telephone line and
- a dispatching (550), from said at least one network entity, in the telephone network, of a notification intended for the at least one terminal associated with the second telephone line,
the notification indicating that the second message is available in the telephone network's mailbox associated with the second identified telephone line and comprising a social network user identifier assigned to the user who requested the posting of the second message.

23. Terminal according to Claim 21 or 22, comprising:
- a dispatching module (400) for dispatching a request for consultation of at least one message posted in said mailbox;
- for at least one first message posted on request of a social network user, *called the posting user,* a module (410, 420) for receiving and rendering a social network user identifier assigned to the posting user in a social network and at least one part of the content of the first message.
